# EUROPEAN PATENT SPECIFICATION

(11) **EP 3 564 299 B1**
(45) Date of publication and mention of the grant of the patent: **06.09.2023**
(21) Application number: 19176414.1
(22) Date of filing: 15.07.2016
(51) Int. Cl.: C08K 5/00, C08K 5/3435, C08K 5/3492, C08K 5/5357

(54) **FLAME RETARDANT POLYOLEFIN ARTICLES**
FLAMMHEMMENDE POLYOLEFINARTIKEL
ARTICLES DE POLYOLÉFINE IGNIFUGES

(30) Priority: 20.07.2015 US 201562194503 P; 22.01.2016 EP 16152407
(43) Date of publication of application: 06.11.2019
(62) Divisional of application: 16739463.4
(73) Proprietor: BASF SE, 67056 Ludwigshafen am Rhein (DE)
(72) Inventor: Lips, Gerard, 5082 Kaisten (CH); Mueller, Daniel, 5082 Kaisten (CH); Thompson, Thomas F., Tarrytown, NY 10591 (US); Andrews, Stephen Mark, Richmond, VA 23220 (US)
(74) Representative: BASF IP Association

(56) References cited:
- US-A1- 2003 220 422
- US-A1- 2011 257 310
- US-B1- 6 376 584
- US-B1- 6 472 456

## Description

The present invention relates to a flame retardant article comprising a polyolefin substrate, a specific phosphonate ester, a synergist comprising an N-alkoxy hindered amine and melamine cyanurate. A further aspect of the invention is the flame retardant composition itself and the use therof for increasing the flame retardency of polyolefins. The present invention also relates to flame retardant compositions compring a specific phosphonate ester and a specific non-triazine containing N-alkoxy hindered amine.

There is still a need for flame retardant systems with improved properties that can be used in polyolefins. Especially increased safety regulations and legislative activities are the reason why known flame retardant systems do no longer match all necessary requirements. Halogen free or halogen reduced flame retardant formulations are preferred for environmental reasons and also due to their better performance in terms of smoke density and toxicity associated with fire. Improved thermal and light stability and less corrosive behaviour are further benefits of halogen free or halogen reduced flame retardant solutions.

US2011257310 relates to flame retardant compositions comprising a synergistic mixture of a phosphonate compound and a 1,3,5-triazine compound.

The synergistic flame retardant mixtures of the invention are halogen free and achieve the desired flame retardancy (e.g. UL94 vertical burn ("VB") test) at low loading levels compared to conventional systems such as brominated flame retardants in combination with antimony oxide. When the instant composition is used, or added to conventional flame retardants, the total amount needed to achieve a certain level of flame retardancy can be significantly lowered. As a result, mechanical properties and long term stability increase. Furthermore, required levels of light stability and processing stability can be met or exceeded.

The synergistic mixtures of the present invention work at very low concentrations and allow to reduce or eliminate the content of antimony oxide and of brominated flame retardant. Polyolefins with excellent flame retardant properties are achieved when the synergistice mixtures of the present invention are used. Moreover, burning times and flaming dripping during the application of fire is significantly reduced. Furthermore, by use of the flame retardant compositions of the invention, besides halogen containing flame retardants and antimony compounds, also fillers may be largely reduced or replaced.

One aspect of the invention is a flame-retardant article comprising a polyolefin substrate having additives incorporated therein, the additives comprising
a phosphonate ester of formula 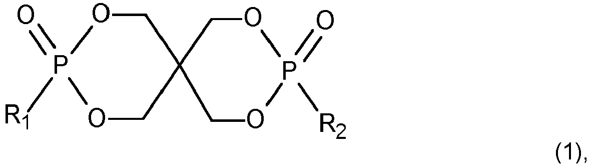
wherein R₁ and R₂ are independently selected from a group consisting of alkyl, optionally substituted alkyl, benzyl, optionally substituted benzyl, phenyl, optionally substituted phenyl, naphthyl, and optionally substituted naphthyl,
a synergist comprising an N-alkoxy hindered amine, and
a melamine cyanurate.
R₁ and R₂ as alkyl are preferably a straight chain or branched C₁-C₁₀alkyl group, especially a straight chain or branched C₁-C₄alkyl group.

As substituents of R₁ and R₂ as benzyl, phenyl and naphthyl there may be mentioned halogen, nitro, cyano, hydroxyl, amino, carboxy, C₁-C₄alkyl and C₁-C₄alkoxy. Preferred are unsubstituted benzyl, phenyl and naphthyl.

It is highly preferred that R₁ and R₂ are methyl or benzyl, especially methyl.

The N-alkoxy hindered amine is a compound of formula 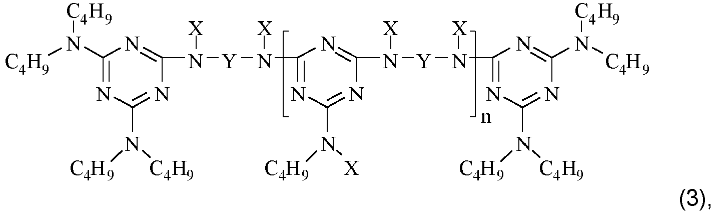
wherein X is a group of formula 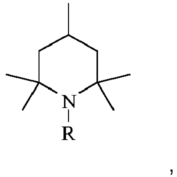
Y is -(CH₂)₆-, each R is -OC₃H₇ and n is an integer from 1 to 5,
or a compound of formula 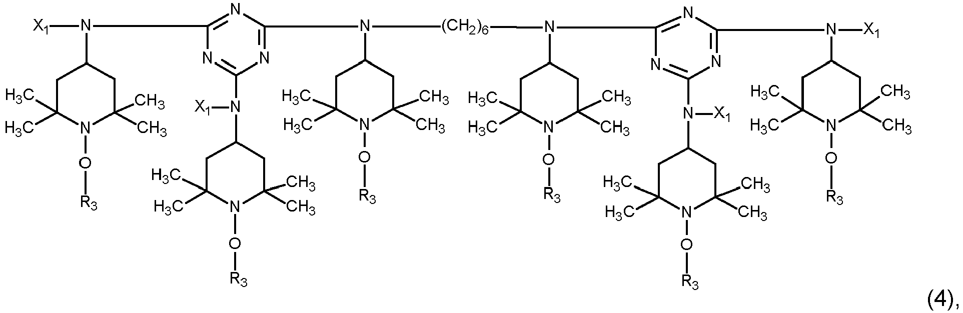 wherein R₃ is n-propyl and X₁ is n-butyl.

A certain embodiment of the invention is directed to compounds of formulae (3), and (4), especially (3).

Melamine cyanurate is the salt formed from melamine and cyanuric acid, and can be obtained, for example, by the reaction of preferably equimolar quantities of melamine and cyanuric acid. Suitable melamine cyanurate is commercially available, for example, as Melapur^{®} MC (available from BASF SE). The average particle size of the melamine cyanurate is generally less than 50 microns, preferably less than 35 microns; and more preferred 25 microns or less.

Any size particle of the melamine cyanurate may be used, but preferably a small particle size is used to impart a smoother surface to finished parts.

In certain embodiments, the polyolefin substrate includes, for example, polypropylene (PP), polyethylene (PE), and co-polymers thereof. The polyolefin substrate may have other polymers incorporated therein, including polystyrene, polyamide, polyester, polycarbonate, epoxy resins, polyurethane, and copolymers (e.g., random or block copolymers) or mixtures thereof. In certain embodiments, the polyolefin substrate includes linear low density polyethylene (LLDPE), low density polyethylene (LDPE), medium density polyethylene (MDPE), or high density polyethylene (HDPE). Certain embodiments of polymer mixtures include, for example, PP/HDPE, PP/LLDPE, and LLDPE/HDPE as well as ternary mixtures such as PP/HDPE/LLDPE. In certain embodiments, polymers can be linear or branched and can be formulated with or without crosslinking (e.g., chemical crosslinking).

In certain embodiments, blends of PP and PE may be optionally blended with a third polymer suitable to facilitate a level of compatibility, partial miscibility, or miscibility of components in the blend. Such materials are referred to as "interfacial tension reducing agents" or "compatibilizers".

In certain embodiments, polymers may be crosslinked to introduce long chain branches (LCB) off of a polypropylene main chain, resulting in higher melt strength and extensibility and lower melt flow than is presently commercially available in polypropylene grades.

In certain embodiments that utilize polypropylene, compositions may contain an additive that promotes higher level of crystallinity formed in the polymer than otherwise exists upon melt converting into shaped articles. Such additives are referred to as "nucleating agents".

Examples of such nucleating agents are the following: Inorganic substances, such as talcum, metal oxides, such as titanium dioxide or magnesium oxide, phosphates, carbonates or sulfates of, preferably, alkaline earth metals; organic compounds, such as aromatic bis-acetals, for example 1,3:2,4-bis(benzylidene)sorbitol, commercially available as Irgaclear D (RTM), Millad 3905 (RTM) and Gel All D (RTM), 1,3:2,4-bis(4-methylbenzylidene)sorbitol, commercially available as Irgaclear DM (RTM), Millad 3940 (RTM), NC-6 (Mitsui (RTM)) and Gel All MD (RTM), 1,3:2,4-bis(3,4-dimethylbenzylidene)sorbitol, commercially available as Millad 3988 (RTM), 1,3:2,4-bis(4-ethylbenzylidene)sorbitol, commercially available as NC-4 (Mitsui (RTM)), 1,2,3-trideoxy-4,6:5,7-bis-O-[(4-propylphenyl)methylene]-nonitol, commercially available as Millad NX 8000 (RTM), or nucleating agents based upon salts of carboxylic acid, for example sodium benzoate, or nucleating agents based upon carboxy aluminum-hydroxide, for example aluminum hydroxy-bis[4-(tert-butyl)benzoate], commercially available as Sandostab 4030 (RTM), or nucleating agents based upon salts of rosin, respectively abietic acid, for example Pinecrystal KM-1300 (RTM) or Pinecrystal KM-1600 (RTM), or the di-sodium salt of cis-endo-bicyclo(2.2.1)heptane 2,3-dicarboxylic acid (= Chemical Abstracts Registry No. 351870-33-2), commercially available as Hyperform HPN-68 (RTM) and calcium salt of hexahydrophthalic acid, commercially available as Hyperform HPN-20 E (RTM), or Zn glycerolate (CAS Registry No. 87189-25-1; for example commercially available as Prifer 3881 (RTM) or Prifer 3888 (RTM)), or 1,3,5-tris[2,2-dimethylpropionylamino]benzene.

Polyolefins can be prepared by various methods including, for example, radical polymerization (normally under high pressure and at elevated temperature) and catalytic polymerization (e.g., using a catalyst that normally contains one or more than one metal of groups IVb, Vb, Vlb, or VIII). Such metals may form metal complexes that usually have one or more than one ligand, typically oxides, halides, alcoholates, esters, ethers, amines, alkyls, alkenyls, and/or aryls that may be either π- or σ-coordinated. Such metal complexes may be in the free form or fixed on substrates, typically on activated magnesium chloride, titanium(III) chloride, alumina, or silicon oxide. Catalysts may be soluble or insoluble in the polymerization medium. Catalysts can be used by themselves in the polymerization or further activators may be used, typically metal alkyls, metal hydrides, metal alkyl halides, metal alkyl oxides, or metal alkyloxanes, with the metals being elements of groups la, Ila, and/or Illa. The activators may be modified conveniently with further ester, ether, amine, or silyl ether groups. These catalyst systems are usually termed "Phillips", "Standard Oil Indiana", "Ziegler(-Natta)", "TNZ", "metallocene", or "single site catalysts".

In certain embodiments that utilize polypropylene, the polypropylene is a polypropylene random copolymer, alternating or segmented copolymer, or block copolymer containing one or more comonomers selected from ethylene, 1-propene, C₄-C₂₀-α-olefin, vinylcyclohexane, vinylcyclohexene, C₄-C₂₀-alkandiene, C₅-C₁₂-cycloalkandiene, and norbornene derivatives, with a total mole amount of propylene and the comonomer(s) being 100%. Examples of suitable C₄-C₂₀-α-olefins include, but are not limited to, 1-butene, 1-pentene, 1-hexene, 1-heptene, 1-octene, 1-nonene, 1-decene, 1-undecene, 1-dodecene, 1-tetradecene, 1-hexadecene, 1-octadecene, 1-eicosene, and 4-methyl-1-pentene. Examples of suitable C₄-C₂₀-alkandienes include, but are not limited to, hexadiene and octadiene. Examples of suitable C₅-C₁₂-cycloalkandienes include, but are not limited to, cyclopentadiene, cyclohexadiene, and cyclooctadiene. Examples of suitable norbornene derivatives include, but are not limited to, 5-ethylidene-2-norbornene, dicyclopentadiene, and methylene-dimethylene-hexahydronaphthalene.

Polypropylene copolymers also include long chain branched polypropylene copolymer. In some embodiments, a propylene/ethylene copolymer contains, for example, 50 wt% to 99.9 wt%, 80 wt% to 99.9 wt%, or 90 wt% to 99.9 wt% propylene.

In certain embodiments, the polyolefin polymer forming the substrate is selected from polypropylene, polyethylene, and copolymers or mixtures thereof. The substrate may include additional polymers incorporated therein, including, but not limited to, polystyrene, polyamide, polyester, polycarbonate, epoxy resins, polyurethane, or copolymers or mixtures thereof. In certain embodiments, a total amount of the other polymers incorporated in the polyolefin substrate is less than 15 wt%, less than 20 wt%, less than 25 wt%, less than 30 wt%, less than 35 wt%, less than 40 wt%, less than 45 wt%, less than 50 wt%, less than 55 wt%, less than 60 wt%, less than 65 wt%, less than 70 wt%, less than 75 wt%, less than 80 wt%, or less than 85 wt% of a total weight of the polyolefin substrate.

In certain embodiments, a propylene copolymer in which the comonomer is a C₉-C₂₀-α-olefin (e.g., 1-nonene, 1-decene, 1-undecene, 1-dodecene, 1-tetradecene, 1-hexadecene, 1-octadecene or 1-eicosene), a C₉-C₂₀alkandiene, a C₉-C₁₂cycloalkandiene, or a norbornene derivative (e.g., 5-ethylidene-2-norbornene or methylene-dimethylene-hexahydronaphthalene) may contain at least 90 mol%, 90 mol% to 99.9 mol%, or 90 mol% to 99 mol% of propylene.

In certain embodiments, a propylene copolymer in which the comonomer is a C₄-C-α-olefin (e.g., 1-butene, 1-pentene, 1-hexene, 1-heptene, 1-octene, or 4-methyl-1-pentene), vinylcyclohexane, vinylcyclohexene, C₄-C₈-alkandiene, or Cs-Cscycloalkandiene may contain at least 80 mol%, 80 mol% to 99.9 mol%, or 80 mol% to 99 mol% propylene.

Further embodiments of the polyolefin substrate include propylene/isobutylene copolymer, propylene/butadiene copolymer, propylene/cycloolefin copolymer, terpolymers of propylene with ethylene and a diene (e.g., hexadiene, dicyclopentadiene, or ethylidene-norbornene), propylene/1-olefin copolymers (e.g., where the 1-olefin is generated in situ), and propylene/carbon monoxide copolymers.

Preferred are polypropylene and polyethylene, especially polyethylene.

In certain embodiments, one or more flame-retardant compounds, in addition to the phosphonate ester of formula (1), the N-alkoxy hindered amine and the melamine cyanurate, may be incorporated as additives into the polyolefin substrate.

Phosphorus containing flame-retardants may include phosphazene flame-retardants, which are disclosed for example in EP1104766, JP07292233, DE19828541, DE1988536, JP11263885, U.S. Pat. Nos. 4,079,035, 4,107,108, 4,108,805, and 6,265,599. Non-halogenated phosphorus-based flame-retardants are compounds that include phosphorus, such as triphenyl phosphates, phosphate esters, phosphonium derivatives, phosphonates, phosphoric acid esters, and phosphate esters, and those described in U.S. Patent No. 7,786,199. Phosphorus-based (organophosphorus) flame-retardants are usually composed of a phosphate core to which is bonded alkyl (generally straight chain) or aryl (aromatic ring) groups. Examples include red phosphorus, inorganic phosphates, insoluble ammonium phosphate, ammonium polyphosphate, ammonium urea polyphosphate, ammonium orthophosphate, ammonium carbonate phosphate, ammonium urea phosphate, diammonium phosphate, ammonium melamine phosphate, diethylenediamine polyphosphate, dicyandiamide polyphosphate, polyphosphate, urea phosphate, melamine pyrophosphate, melamine orthophosphate, melamine salt of dimethyl methyl phosphonate, melamine salt of dimethyl hydrogen phosphite, ammonium salt of boron-polyphosphate, urea salt of dimethyl methyl phosphonate, organophosphates, phosphonates and phosphine oxide. Phosphate esters include, for example, trialkyl derivatives, such as triethyl phosphate, tris(2-ethylhexyl)phosphate, trioctyl phosphate, triaryl derivatives, such as triphenyl phosphate, cresyl diphenyl phosphate and tricresyl phosphate and aryl-alkyl derivatives, such as 2-ethylhexyl-diphenyl phosphate and dimethyl-aryl phosphates and octylphenyl phosphate, and ethylene diamine phosphates.

Other examples of phosphorus-based flame-retardants include methylamine boron-phosphate, cyanuramide phosphate, magnesium phosphate, ethanolamine dimethyl phosphate, cyclic phosphonate ester, trialkyl phosphonates, potassium ammonium phosphate, cyanuramide phosphate, aniline phosphate, trimethylphosphoramide, tris(1-aziridinyl)phosphine oxide, bis(5,5-dimethyl-2-thiono-1,3,2-dioxaphosphorinamyl)oxide, dimethylphosphono-N-hydroxymethyl-3-propionamide, tris(2-butoxyethyl)phosphate, tetrakis(hydroxymethyl)phosphonium salts, such as tetrakis(hydroxymethyl)phosphonium chloride and tetrakis(hydroxymethyl)phosphonium sulfate, n-hydroxymethyl-3-(dimethylphosphono)-propionamide, a melamine salt of boron-polyphosphate, an ammonium salt of boron-polyphosphate, triphenyl phosphite, ammonium dimethyl phosphate, melamine orthophosphate, ammonium urea phosphate, ammonium melamine phosphate, a melamine salt of dimethyl methyl phosphonate, a melamine salt of dimethyl hydrogen phosphite.

Metal hydroxide flame-retardants include inorganic hydroxides, such as aluminum hydroxide, magnesium hydroxide, alumina trihydrate (ATH) and hydroxycarbonate.

Melamine based flame-retardants are a family of non-halogenated flame-retardants that include three chemical groups: (a) melamine (2,4,6-triamino-1,3,5 triazine); (b) melamine derivatives (including salts with organic or inorganic acids, such as boric acid, cyanuric acid, phosphoric acid or pyro/poly-phosphoric acid); and (c) melamine homologues. Melamine derivatives include, for example, melamine-mono-phosphate (a salt of melamine and phosphoric acid), melamine pyrophosphate and melamine polyphosphate. Melamine homologues include melam (1,3,5-triazin-2,4,6-triamine-n-(4,6-diamino-1,3,5-triazine-2-yl), melem (2,5,8-triamino 1,3,4,6,7,9,9b-heptaazaphenalene) and melon (poly[8-amino-1,3,4,6,7,9,9b-heptaazaphenalene-2,5-diyl).

Melamine based flame-retardants also include melamine compound/polyol condensates. For example, as disclosed in U.S. Patent App. No. 10/539,097 (published as WO 2004/055029) and U.S. Patent Pub. No. 2010/152376, where the polyol is a linear, branched or cyclic trihydric, tetrahydric, pentahydric or hexahydric alcohol or a linear or cyclic C₄-C₆ aldose or C₄-C₆ ketose and where the melamine compound is melamine phosphate, melamine pyrophosphate or melamine polyphosphate. In some embodiments, the polyol is pentaerythritol or dipentaerythritol. In some embodiments, the melamine compound is melamine phosphate. The molar ratio of melamine compound to the polyol is, in some embodiments, from about 1:1 to about 4:1. The condensate may further have incorporated therein a dendritic polymer substituted by hydroxy groups, for instance a dendritic polyester or dendritic polyamide. A dendritic polyester may be a product of an initiator compound selected from trimethyolpropane, pentaerythritol, ethoxylated pentaerythritol, and chain-extending dimethylpropionic acid. A dendritic polyamide is, in some embodiments, a polycondensate of a cyclic carboxylic acid anhydride and diisopropanolamine.

Borate flame-retardant compounds may include, for example, zinc borate, borax (sodium borate), ammonium borate, and calcium borate. Zinc borate is a boron based flame-retardant having the chemical composition xZnO_{y}B₂O₃·zH₂O. Zinc borate can be used alone, or in conjunction with other chemical compounds, such as alumina trihydrate, magnesium hydroxide or red phosphorus. It acts through zinc halide or zinc oxyhalide, which accelerate the decomposition of halogen sources and promote char formation.

Examples of other metal containing flame-retardant substances, which can be employed alone or in combination with other flame-retardant substances, include, but are not limited to, magnesium oxide, magnesium chloride, talcum, alumina hydrate, zinc oxide, alumina trihydrate, alumina magnesium, calcium silicate, sodium silicate, zeolite, sodium carbonate, calcium carbonate, ammonium molybdate, iron oxide, copper oxide, zinc phosphate, zinc chloride, clay, sodium dihydrogen phosphate, tin, molybdenum, and zinc.

In certain embodiments, the organophosphorus compound is a phosphate ester having a formula of:

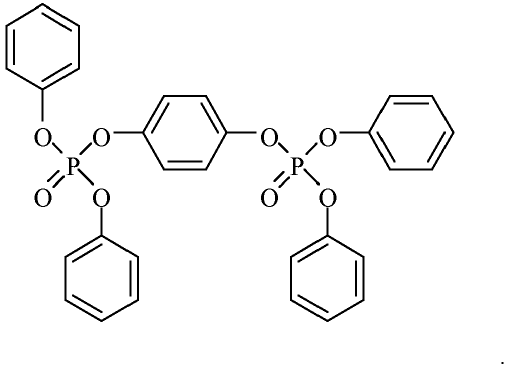

In certain embodiments, the organophosphorus compound is a phosphonate ester having a formula of:

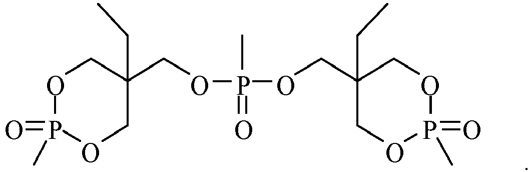

In certain embodiments, the organophosphorus compound is a phosphonate ester having a formula of:

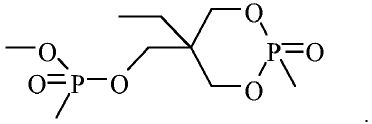

In certain embodiments, the organophosphorus compound is a phosphate ester having a formula of: 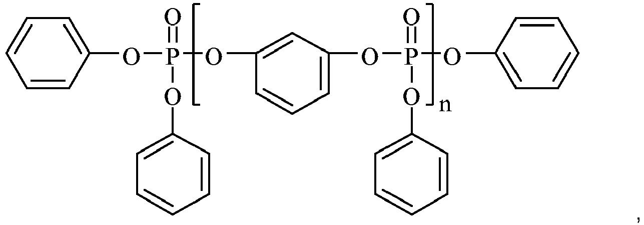 where n is an integer from 1 to 7.

In certain embodiments, the organophosphorus compound is a phosphate ester having a formula of: 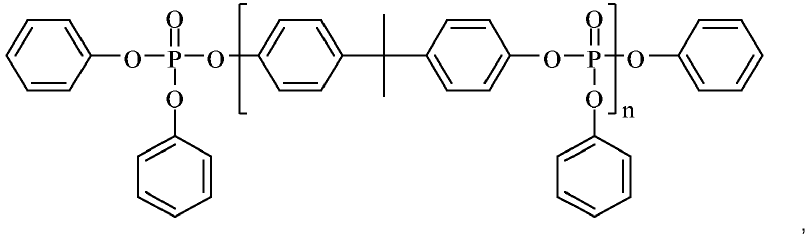 where n is 1 or 2.

In certain embodiments, the organophosphorus compound is a phosphate ester having a formula of: 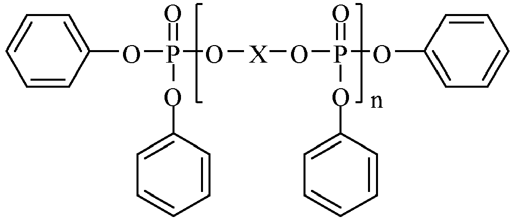 where X is divalent arylene, and n is 1 or 2.

In certain embodiments, the organophosphorus compound is a phosphate ester having a formula of:

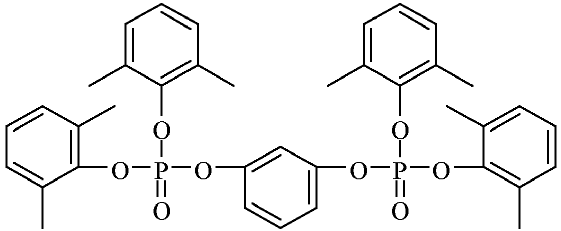

In certain embodiments, other suitable organophosphorus compounds may be used.

In certain embodiments, the one or more flame-retardant compounds (e.g., organophosphorus compounds) are present in an amount from 1 wt% to 70 wt%, 1 wt% to 60 wt%, 1 wt% to 50 wt%, 1 wt% to 40 wt%, 1 wt% to 30 wt%, 1 wt% to 20 wt%, 1 wt% to 10 wt%, 2 wt% to 9 wt%, 3 wt% to 6 wt%, 2 wt% to 5 wt%, or 1 wt% to 4 wt% based on a weight of the polyolefin substrate or the article thereof.

In certain embodiments, organo-halogen flame retardants may be included, for example:
Polybrominated diphenyl oxide (DE-60F, Chemtura Corp.), decabromodiphenyl oxide (DBDPO; Saytex^{®} 102E), tris[3-bromo-2,2-bis(bromomethyl)propyl] phosphate (PB 370^{®}, FMC Corp.), tris(2,3-dibromopropyl)phosphate, tris(2,3-dichloropropyl)phosphate, chlorendic acid, tetrachlorophthalic acid, tetrabromophthalic acid, polychloroethyl triphosphonate mixture, tetrabromobisphenol A bis(2,3-dibromopropyl ether) (PE68), brominated epoxy resin, ethylene-bis(tetrabromophthalimide) (Saytex^{®} BT-93), bis(hexachlorocyclopentadieno)cyclooctane (Declorane Plus^{®}), chlorinated paraffins, octabromodiphenyl ether, 1,2-bis(tribromophenoxy)-ethane (FF680), tetrabromobisphenol A (Saytex^{®} RB100), ethylene bis-(dibromonorbornanedicarboximide) (Saytex^{®} BN-451), brominated polyacrylate (FR-1025, ICL Industrial), bis-(hexachlorocyclopentadieno) cyclooctane, PTFE, tris-(2,3-dibromopropyl)-isocyanurate, ethylene-bis-tetrabromophthalimide, and brominated polybutadiene-polystyrene.

The organohalogen flame retardants mentioned above are routinely combined with an inorganic oxide synergist. Most common for this use are zinc or antimony oxides, e.g. Sb₂O₃ or Sb₂O₅. Boron compounds are suitable, too.

The above-mentioned additional flame retardant classes are advantageously contained in the composition of the invention in an amount from about 0.5% to about 75.0% by weight of the organic polymer substrate; for instance about 10.0% to about 70.0%; for example about 25.0% to about 65.0% by weight, based on the total weight of the composition.

In certain embodiments, anti-dripping agents may be included. These anti-dripping agents reduce the melt flow of the thermoplastic polymer and inhibit the formation of drops at high temperatures. Various references, such as U.S. Patent Specification No. 4,263,201, describe the addition of anti-dripping agents to flame retardant compositions. Suitable additives that inhibit the formation of drops at high temperatures include glass fibres, polytetrafluoroethylene (PTFE), high temperature elastomers, carbon fibres, glass spheres and the like.

The phosphonate ester of formula (1) is preferably present in the polyolefin substrates, especially in corresponding articles thereof, in an amount of from 0.02 to 20%, especially 0.1 to 10%, and more preferably 1 to 10% by weight.

The hindered N-alkoxy amine is preferably present in the polyolefin substrates, especially in corresponding articles thereof, in an amount of from 0.02 to 20%, especially 0.02 to 10%, and more preferably 0.1 to 5% by weight.

The mealmine cyanurate is preferably present in the polyolefin substrates, especially in corresponding articles thereof, in an amount of from 0.02 to 20%, especially 0.1 to 10%, and more preferably 1 to 10% by weight.

Preferred are polyolefin substrates, especially corresponding articles thereof, wherein the phosphonate ester of formula (1) is present in an amount of from 0.02 to 20% by weight, the hindered N-alkoxy amine is present in an amount of from 0.02 to 20% by weight, and the melamine cyanurate is present in an amount of from 0.02 to 20% by weight.

More preferred are polyolefin substrates, especially corresponding articles thereof, wherein the phosphonate ester of formula (1) is present in an amount of from 0.1 to 10% by weight, the hindered N-alkoxy amine is present in an amount of from 0.02 to 10% by weight, and the melamine cyanurate is present in an amount of from 0.1 to 10% by weight.

Highly preferred are polyolefin substrates, especially corresponding articles thereof, wherein the phosphonate ester of formula (1) is present in an amount of from 1 to 10% by weight, the hindered N-alkoxy amine is present in an amount of from 0.1 to 5% by weight, and the melamine cyanurate is present in an amount of from 1 to 10% by weight.

The total weight of flame retardants (including the phosphonate ester of formula (1), the N-alkoxy hindered amine and the melamine cyanurate) in the polyolefin substrate, or in corresponding articles thereof, may be 1 wt% to 70 wt%, 1 wt% to 60 wt%, 1 wt% to 50 wt%, 1 wt% to 40 wt%, 1 wt% to 30 wt%, 1 wt% to 20 wt%, 1 wt% to 10 wt%, 2 wt% to 9 wt%, 3 wt% to 6 wt%, 2 wt% to 5 wt%, or 1 wt% to 4 wt%.

The above weights in the polyolefin substrates, or corresponding articles thereof, are in each case based on the total weight of the polyolefin substrate or, respectively, the corresponding article.

In certain embodiments, one or more synergists (e.g., light absorbers) may be incorporated as further additives into the polyolefin substrate. Synergists may also be referred to as "stabilizers". Certain synergist compounds described herein may, besides the use as stabilizer, also be utilized as flame-retardant compounds.

In certain embodiments, ultraviolet (UV) light absorbers include, for example, hydroxyphenylbenzotriazole, tris-aryl-s-triazine, hydroxyl-benzoate, and 2-hydroxybenzophenone ultraviolet light absorbers (UVAs), as well as cyanoacrylates such as those known by tradenames Uvinul^{®} 3030, 3035, 3039 and oxanilide such as Tinuvin^{®} 312.

Suitable hydroxyphenylbenzotriazole UVAs, for example, are disclosed in U.S. Patent Nos. 3,004,896, 3,055,896, 3,072,585, 3,074,910, 3,189,615, 3,218,332, 3,230,194, 4,127,586, 4,226,763, 4,275,004, 4,278,589, 4,315,848, 4,347,180, 4,383,863, 4,675,352, 4,681,905, 4,853,471, 5,268,450, 5,278,314, 5,280,124, 5,319,091, 5,410,071, 5,436,349, 5,516,914, 5,554,760, 5,563,242, 5,574,166, 5,607,987, 5,977,219, and 6,166,218, and include, for example, 2-(2-hydroxy-5-methylphenyl)-2H-benzotriazole; 2-(3,5-di-t-butyl-2-hydroxyphenyl)-2H-benzotriazole; 2-(2-hydroxy-5-t-butylphenyl)-2H-benzotriazole; 2-(2-hydroxy-5-t-octylphenyl)-2H-benzotriazole; 5-chloro-2-(3,5-di-t-butyl-2-hydroxyphenyl)-2H-benzotriazole; 5-chloro-2-(3-t-butyl-2-hydroxy-5-methylphenyl)-2H-benzotriazole; 2-(3-sec-butyl-5-t-butyl-2-hydroxyphenyl)-2H-benzotriazole; 2-(2-hydroxy-4-octyloxyphenyl)-2H-benzotriazole; 2-(3,5-di-t-amyl-2-hydroxyphenyl)-2H-benzotriazole; 2-(3,5-bis-α-cumyl-2-hydroxyphenyl)-2H-benzotriazole; 2-(3-t-butyl-2-hydroxy-5-(2-(ω-hydroxy-octa-(ethyleneoxy)carbonyl-ethyl)-phenyl)-2H-benzotriazole; 2-(3-dodecyl-2-hydroxy-5-methylphenyl)-2H-benzotriazole; 2-(3-t-butyl-2-hydroxy-5-(2-octyloxycarbonyl) ethyl phenyl)-2 H-benzotriazole; dodecylated 2-(2-hydroxy-5-methylphenyl)-2H-benzotriazole; 2-(3-t-butyl-2-hydroxy-5-(2-octyloxycarbonylethyl)phenyl)-5-chloro-2H-benzotriazole; 2-(3-tert-butyl-5-(2-(2-ethylhexyloxy)-carbonylethyl)-2-hydroxyphenyl)-5-chloro-2H-benzotriazole; 2-(3-t-butyl-2-hydroxy-5-(2-methoxycarbonylethyl)phenyl)-5-chloro-2H-benzotriazole; 2-(3-t-butyl-2-hydroxy-5-(2-methoxycarbonylethyl)phenyl)-2H-benzotriazole; 2-(3-t-butyl-5-(2-(2-ethylhexyloxy)carbonylethyl)-2-hydroxyphenyl)-2H-benzotriazole; 2-(3-t-butyl-2-hydroxy-5-(2-isooctyloxycarbonylethyl)phenyl-2H-benzotriazole; 2,2'-methylene-bis(4-t-octyl-(6-2H-benzotriazol-2-yl)phenol); 2-(2-hydroxy-3- α-cumyl-5-t-octylphenyl)-2H-benzotriazole; 2-(2-hydroxy-3-t-octyl-5-α-cumylphenyl)-2H-benzotriazole; 5-fluoro-2-(2-hydroxy-3,5-di-α-cumylphenyl)-2H-benzotriazole; 5-chloro-2-(2-hydroxy-3,5-di-α-cumylphenyl)-2H-benzotriazole; 5-chloro-2-(2-hydroxy-3-α-cumyl-5-t-octylphenyl)-2H-benzotriazole; 2-(3-t-butyl-2-hydroxy-5-(2-isooctyloxycarbonylethyl)phenyl)-5-chloro-2H-benzotriazole; 5-trifluoromethyl-2-(2-hydroxy-3-α-cumyl-5-t-octylphenyl)-2H-benzotriazole; 5-trifluoromethyl-2-(2-hydroxy-5-t-octylphenyl)-2H-benzotriazole; 5-trifluoromethyl-2-(2-hydroxy-3,5-di-t-octylphenyl)-2H-benzotriazole; methyl 3-(5-trifluoromethyl-2H-benzotriazol-2-yl)-5-t-butyl-4-hydroxyhydrocinnamate; 5-butylsulfonyl-2-(2-hydroxy-3-α-cumyl-5-t-octylphenyl)-2H-benzotriazole; 5-trifluoromethyl-2-(2-hydroxy-3-α-cumyl-5-t-butylphenyl)-2H-benzotriazole; 5-trifluoromethyl-2-(2-hydroxy-3,5-di-t-butylphenyl)-2H-benzotriazole; 5-trifluoromethyl-2-(2-hydroxy-3,5-di-α-cumylphenyl)-2H-benzotriazole; 5-butylsulfonyl-2-(2-hydroxy-3,5-di-t-butylphenyl)-2H-benzotriazole; and 5-phenylsulfonyl-2-(2-hydroxy-3,5-di-t-butylphenyl)-2H-benzotriazole.

Suitable tris-aryl-s-triazine UVAs, for example, are disclosed in U.S. Patent Nos. 3,843,371, 4,619,956, 4,740,542, 5,096,489, 5,106,891, 5,298,067, 5,300,414, 5,354,794, 5,461,151, 5,476,937, 5,489,503, 5,543,518, 5,556,973, 5,597,854, 5,681,955, 5,726,309; 5,736,597, 5,942,626, 5,959,008, 5,998,116, 6,013,704, 6,060,543, 6,242,598, and 6,255,483, and include, for example, 4,6-bis-(2,4-dimethylphenyl)-2-(2-hydroxy-4-octyloxyphenyl)-s-triazine; CYASORB UV-1164; 4,6-bis-(2,4-dimethylphenyl)-2-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2-hydroxy-4-(2-hydroxyethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine; 2,4-bis(2,4-dihydroxyphenyl)-6-(2,4-dimethylphenyl)-s-triazine; 2,4-bis(4-biphenylyl)-6-(2-hydroxy-4-octyloxycarbonylethylideneoxyphenyl)-s-triazine; 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine; 2,4-bis(2,4-dimethylphenyl)-6-[2-hydroxy-4-(3-benzyloxy-2-hydroxypropyloxy)phenyl]-s-triazine; 2,4-bis(2-hydroxy-4-n-butyloxyphenyl)-6-(2,4-di-n-butyloxyphenyl)-s-triazine; 2,4-bis(2,4-dimethylphenyl)-6-[2-hydroxy-4-(3-nonyloxy*-2-hydroxypropyloxy)-5-α-cumylphenyl]-s-triazine (where * denotes a mixture of octyloxy, nonyloxy and decyloxy groups); methylenebis-{2,4-bis(2,4-dimethylphenyl)-6-[2-hydroxy-4-(3-butyloxy-2-hydroxypropoxy)phenyl]-s-triazine}; methylene bridged dimer mixture bridged in the 3:5', 5:5', and 3:3' positions in a 5:4:1 ratio; 2,4,6-tris(2-hydroxy-4-isooctyloxycarbonylisopropylideneoxyphenyl)-s-triazine; 2,4-bis(2,4-dimethylphenyl)-6-(2-hydroxy-4-hexyloxy-5-α-cumylphenyl)-s-triazine; 2-(2,4,6-trimethylphenyl)-4,6-bis[2-hydroxy-4-(3-butyloxy-2-hydroxypropyloxy)phenyl]-s-triazine; 2,4,6-tris[2-hydroxy-4-(3-sec-butyloxy-2-hydroxypropyloxy)phenyl]-s-triazine; mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine; TINUVIN 400, 4,6-bis-(2,4-dimethylphenyl)-2-(2-hydroxy-4-(3-(2-ethylhexyloxy)-2-hydroxypropoxy)-phenyl)-s-triazine; and 4,6-diphenyl-2-(4-hexyloxy-2-hydroxyphenyl)-s-triazine.

Suitable hydroxybenzoate UV absorbers include, for example, esters of substituted and unsubstituted benzoic acids, such as 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, and 2-methyl-4,6-di-tert-butylphenyl 3,5-di-tert-butyl-4-hydroxybenzoate.

2-hydroxybenzophenone UV absorbers include, for example, 4-hydroxy, 4-methoxy, 4-octyloxy, 4-decyloxy, 4-dodecyloxy, 4-benzyloxy, 4,2',4'-trihydroxy, and 2'-hydroxy-4,4'-dimethoxy derivatives.

In certain embodiments, a UVA is included as an additive. The UVA may include one or more of 5-chloro-2-(3-t-butyl-2-hydroxy-5-methylphenyl)-2H-benzotriazole, 2-(3,5-bis-α-cumyl-2-hydroxyphenyl)-2H-benzotriazole, 4,6-diphenyl-2-(4-hexyloxy-2-hydroxyphenyl)-s-triazine, 4,6-bis-(2,4-dimethylphenyl)-2-(2-hydroxy-4-octyloxyphenyl)-s-triazine, 2,4-Di-tert-butylphenyl 3,5-di-tert-butyl-4-hydroxybenzoate, hexadecyl 3,5-di-tert-butyl-4-hydroxybenzoate, or 4-octyloxy-2-hydroxybenzophenone.

Certain UVAs are commercial formulations, including, for example TINUVIN 326, TINUVIN 234, TINUVIN 1577, TINUVIN 1600, CYASORB UV 1164, CYASORB THT, CYASORB UV 2908, ADK STAB LA-F70, and CHIMASSORB 81.

In certain embodiments, one or more UVAs are present in an amount from 0.01 wt% to 2.5 wt%, or 0.10 wt% to 1.5 wt% based on a weight of the polyolefin substrate, or the article. In certain embodiments, the one or more UVAs are present in an amount from 0.10 wt% to 0.95 wt%. For example, the one or more UVAs may be present in an amount of about 0.20 wt%, about 0.25 wt%, about 0.30 wt%, about 0.35 wt%, about 0.40 wt%, about 0.45 wt%, about 0.50 wt%, about 0.55 wt%, about 0.60 wt%, about 0.65 wt%, about 0.70 wt%, about 0.75 wt%, about 0.80 wt%, about 0.85 wt%, or about 0.90 wt% based on the weight of the polyolefin substrate or the article, as well as amounts in between the aforementioned amounts.

In certain embodiments, one or more hindered amine light stabilizers (HALS) may be incorporated as further additives into the polyolefin substrate. Suitable HALS, for example, are disclosed U.S. Patent Nos. 5,004,770, 5,204,473, 5,096,950, 5,300,544, 5,112,890, 5,124,378, 5,145,893, 5,216,156, 5,844,026, 5,980,783, 6,046,304, 6,117,995, 6,271,377, 6,297,299, 6,392,041, 6,376,584, and 6,472,456.

Suitable HALS, for example, include 1-cyclohexyloxy-2,2,6,6-tetramethyl-4-octadecylaminopiperidine; bis(2,2,6,6-tetramethylpiperidin-4-yl) sebacate; bis(1-acetoxy-2,2,6,6-tetramethylpiperidin-4-yl) sebacate; bis(1,2,2,6,6-pentamethylpiperidin-4-yl) sebacate; bis(1-cyclohexyloxy-2,2,6,6-tetramethylpiperidin-4-yl) sebacate; bis(1-octyloxy-2,2,6,6-tetramethylpiperidin-4-yl) sebacate; bis(1-acyl-2,2,6,6-tetramethylpiperidin-4-yl) sebacate; bis(1,2,2,6,6-pentamethyl-4-piperidyl) n-butyl-3,5-di-tert-butyl-4-hydroxybenzylmalonate; 2,4-bis[(1-cyclohexyloxy-2,2,6,6-tetramethylpiperidin-4-yl)butylamino]-6-(2-hydroxyethylamino-s-triazine; bis(1-cyclohexyloxy-2,2,6,6-tetramethylpiperidin-4-yl) adipate; 2,4-bis[(1-cyclohexyloxy-2,2,6,6-piperidin-4-yl)butylamino]-6-chloro-s-triazine; 1-(2-hydroxy-2-methylpropoxy)-4-hydroxy-2,2,6,6-tetramethylpiperidine; 1-(2-hydroxy-2-methylpropoxy)-4-oxo-2,2,6,6-tetramethylpiperidine; 1-(2-hydroxy-2-methylpropoxy)-4-octadecanoyloxy-2,2,6,6-tetramethylpiperidine; bis(1-(2-hydroxy-2-methylpropoxy)-2,2,6,6-tetramethylpiperidin-4-yl) sebacate; bis(1-(2-hydroxy-2-methylpropoxy)-2,2,6,6-tetramethylpiperidin-4-yl) adipate; 2,4-bis{N-[1-(2-hydroxy-2-methylpropoxy)-2,2,6,6-tetramethylpiperidin-4-yl]-N-butylamino}-6-(2-hydroxyethylamino)-s-triazine; 4-benzoyl-2,2,6,6-tetramethylpiperidine; di-(1,2,2,6,6-pentamethylpiperidin-4-yl) p-methoxybenzylidenemalonate; 2,2,6,6-tetramethylpiperidin-4-yl octadecanoate; bis(1-octyloxy-2,2,6,6-tetramethylpiperidyl) succinate; 1,2,2,6,6-pentamethyl-4-aminopiperidine; 2-undecyl-7,7,9,9-tetramethyl-1-oxa-3,8-diaza-4-oxo-spiro[4,5]decane; tris(2,2,6,6-tetramethyl-4-piperidyl) nitrilotriacetate; tris(2-hydroxy-3-(amino-(2,2,6,6-tetramethylpiperidin-4-yl)propyl) nitrilotriacetate; tetrakis(2,2,6,6-tetramethyl-4-piperidyl)-1,2,3,4-butane-tetracarboxylate; tetrakis(1,2,2,6,6-pentamethyl-4-piperidyl)-1,2,3,4-butane-tetracarboxylate, 1,1'-(1,2-ethanediyl)-bis(3,3,5,5-tetramethylpiperazinone); 3-n-octyl-7,7,9,9-tetramethyl-1,3,8-triazaspiro[4.5]decan-2,4-dione; 8-acetyl-3-dodecyl-7,7,9,9-tetramethyl-1,3,8-triazaspiro[4.5]decane-2,4-dione; 3-dodecyl-1-(2,2,6,6-tetramethyl-4-piperidyl)pyrrolidin-2,5-dione; 3-dodecyl-1-(1,2,2,6,6-pentamethyl-4-piperidyl)pyrrolidine-2,5-dione; N,N'-bis-formyl-N,N'-bis(2,2,6,6-tetramethyl-4-piperidyl)hexamethylenediamine; reaction product of 2,4-bis[(1-cyclohexyloxy-2,2,6,6-piperidin-4-yl)butylamino]-6-chloro-s-triazine with N,N'-bis(3-aminopropyl)ethylenediamine); condensate of 1-(2-hydroxyethyl)-2,2,6,6-tetramethyl-4-hydroxypiperidine and succinic acid; condensate of N,N'-bis(2,2,6,6-tetramethyl-4-piperidyl)-hexamethylenediamine and 4-tert-octylamino-2,6-dichloro-1,3,5-triazine; condensate of N,N'-bis(2,2,6,6-tetramethyl-4-piperidyl)-hexamethylenediamine and 4-cyclohexylamino-2,6-dichloro-1,3,5-triazine; condensate of N,N'-bis-(2,2,6,6-tetramethyl-4-piperidyl)hexamethylenediamine and 4-morpholino-2,6-dichloro-1,3,5-triazine (CYASORB UV-3346), CYASORB UV-3529 (an N-methylated analog of CYASORB UV-3346); condensate of N,N'-bis-(1,2,2,6,6-pentamethyl-4-piperidyl)hexamethylenediamine and 4-morpholino-2,6-dichloro-1,3,5-triazine; condensate of 2-chloro-4,6-bis(4-n-butylamino-2,2,6,6-tetramethylpiperidyl)-1,3,5-triazine and 1,2-bis(3-aminopropylamino)ethane; condensate of 2-chloro-4,6-di-(4-n-butylamino-1,2,2,6,6-pentamethylpiperidyl)-1,3,5-triazine and 1,2-bis-(3-aminopropylamino)ethane; reaction product of 7,7,9,9-tetramethyl-2-cycloundecyl-1-oxa-3,8-diaza-4-oxospiro [4,5]decane and epichlorohydrin; poly[methyl,(3-oxy-(2,2,6,6-tetramethylpiperidin-4-yl)propyl)] siloxane; reaction product of maleic acid anhydride-C₁₈-C₂₂-α-olefin-copolymer with 2,2,6,6-tetramethyl-4-aminopiperidine; oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine; oligomeric condensate of 4,4'-hexamethylenebis(amino-1,2,2,6,6-pentaamethylpiperidine) and 2,4-dichloro-6-[(1,2,2,6,6-pentaamethylpiperidin-4-yl)butylamino]-s-triazine end-capped with 2-chloro-4,6-bis(dibutylamino)-s-triazine; oligomeric condensate of 4,4'-hexamethylenebis(amino-1-propoxy-2,2,6,6-tetramethylpiperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine; oligomeric condensate of 4,4'-hexamethylenebis(amino-1-acyloxy-2,2,6,6-tetramethylpiperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine; reaction product obtained by reacting (2,2,6,6-tetramethylpiperidin-4-yl)butylamine with product of reaction of 1,2-bis(3-aminopropylamino)ethane with cyanuric chloride; and binary or ternary combinations thereof.

Other suitable HALS include, for example, sterically hindered N-H, N-methyl, N-methoxy, N-propoxy, N-octyloxy, N-cyclohexyloxy, N-acyloxy, and N-(2-hydroxy-2-methylpropoxy) analogues of any of the aforementioned mentioned HALS compounds. For example, replacing an N-H hindered amine with an N-methyl hindered amine would be employing the N-methyl analogue in place of the N-H.

For illustrative purposes, some of the structures for the aforementioned HALS compounds are shown below.
bis(1-octyloxy-2,2,6,6-tetramethylpiperidin-4-yl) sebacate: 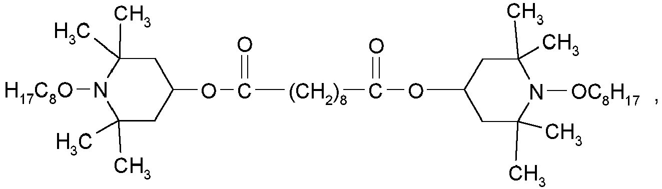
bis(1,2,2,6,6-pentamethyl-4-piperidyl) n-butyl-3,5-di-tert-butyl-4-hydroxybenzylmalonate: 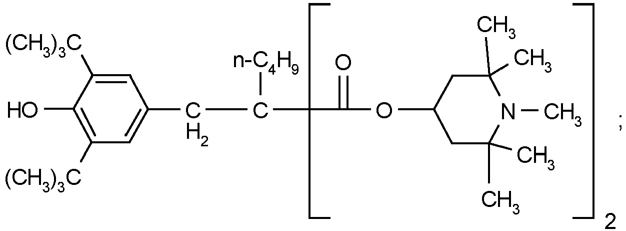
1-(2-hydroxy-2-methylpropoxy)-4-hydroxy-2,2,6,6-tetramethylpiperidine: 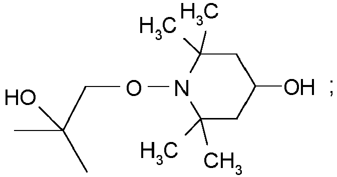
di-(1,2,2,6,6-pentamethylpiperidin-4-yl) p-methoxybenzylidenemalonate: 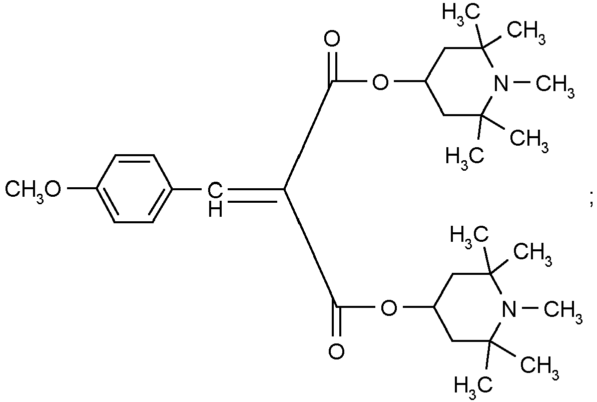
2-u ndecyl-7, 7, 9, 9-tetramethyl-1-oxa-3, 8-di aza-4-oxo-spi ro[4, 5]decane: 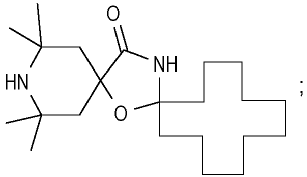
tris(2-hydroxy-3-(amino-(2,2,6,6-tetramethylpiperidin-4-yl)propyl) nitrilotriacetate: 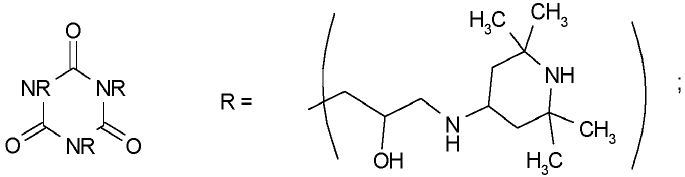
tetrakis(2,2,6,6-tetramethyl-4-piperidyl)-1,2,3,4-butane-tetracarboxylate: 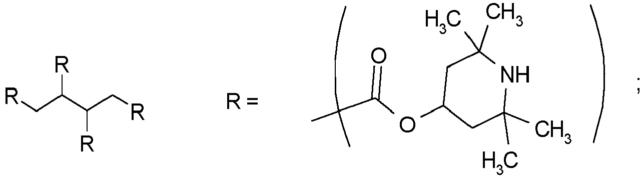
1,1'-(1,2-ethanediyl)-bis(3,3,5,5-tetramethylpiperazinone): 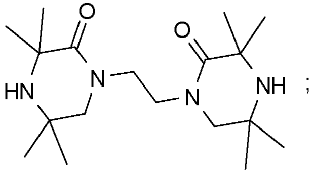
3-n-octyl-7,7,9,9-tetramethyl-1,3,8-triazaspiro[4.5]decan-2,4-dione: 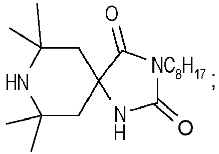
3-dodecyl-1-(2,2,6,6-tetramethyl-4-piperidyl)pyrrolidin-2,5-dione: 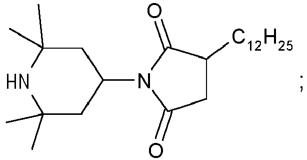
N,N'-bis-formyl-N,N'-bis(2,2,6,6-tetramethyl-4-piperidyl)hexamethylenediamine: 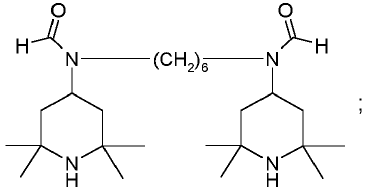
condensate of 1-(2-hydroxyethyl)-2,2,6,6-tetramethyl-4-hydroxypiperidine and succinic acid: 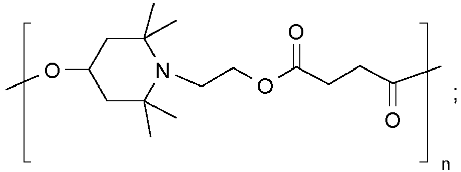
condensate of N,N'-bis(2,2,6,6-tetramethyl-4-piperidyl)-hexamethylenediamine and 4-tert-octylamino-2,6-dichloro-1,3,5-triazine: 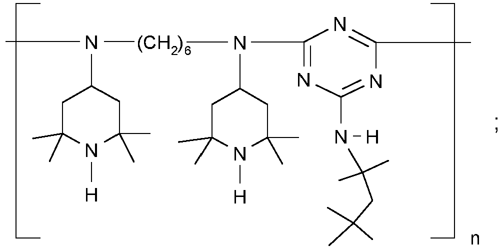
condensate of N,N'-bis-(2,2,6,6-tetramethyl-4-piperidyl)hexamethylenediamine and 4-morpholino-2,6-dichloro-1,3,5-triazine: 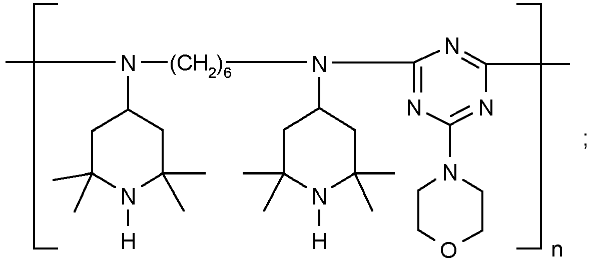
condensate of 2-chloro-4,6-di-(4-n-butylamino-1,2,2,6,6-pentamethylpiperidyl)-1,3,5-triazine and 1,2-bis-(3-aminopropylamino)ethane: 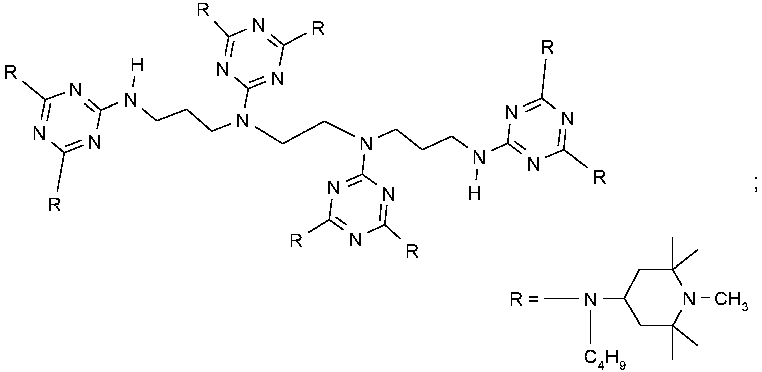
reaction product of 7,7,9,9-tetramethyl-2-cycloundecyl-1-oxa-3,8-diaza-4-oxospiro [4,5]decane and epichlorohydrin: 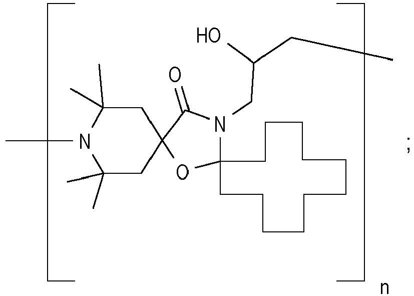
poly[methyl,(3-oxy-(2,2,6,6-tetramethylpiperidin-4-yl)propyl)] siloxane: 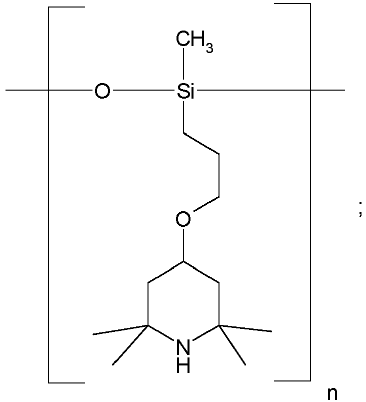
reaction product of maleic acid anhydride-C₁₈-C₂₂-alpha-olefin-copolymer with 2,2,6,6-tetramethyl-4-aminopiperidine: 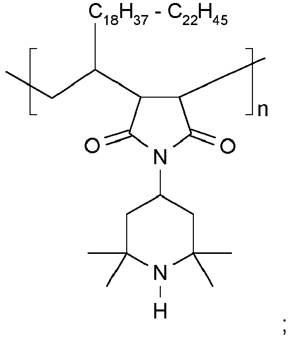
oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine: 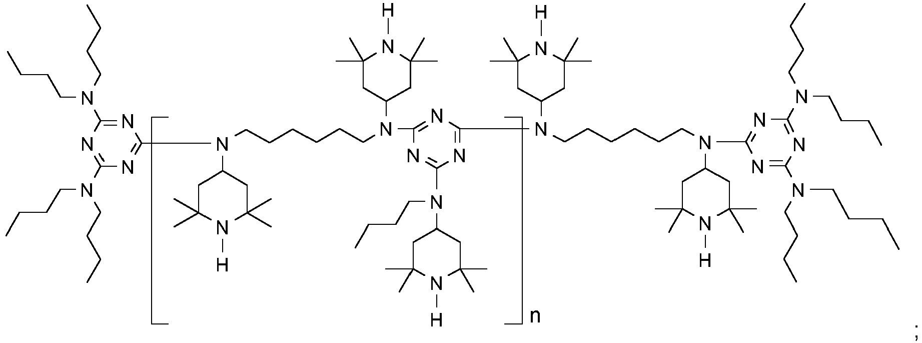
and reaction product obtained by reacting (2,2,6,6-tetramethylpiperidin-4-yl)butylamine with product of reaction of 1,2-bis(3-aminopropylamino)ethane with cyanuric chloride: 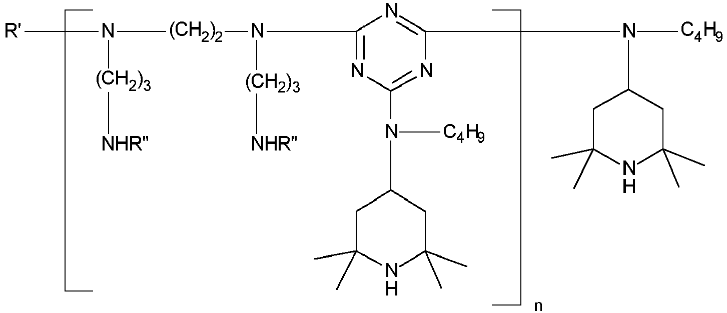 where R' = R" or H
   and where R" =

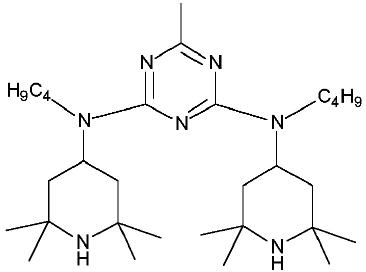

In certain embodiments, binary combinations of HALS may be included as additves. Such binary combinations include, for example, bis(2,2,6,6-tetramethylpiperidin-4-yl) sebacate and condensate of N,N'-bis(2,2,6,6-tetramethyl-4-piperidyl)-hexamethylenediamine and 4-tert-octylamino-2,6-dichloro-1,3,5-triazine; bis(2,2,6,6-tetramethylpiperidin-4-yl) sebacate and oligomeric compound condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine; 2,2,6,6-tetramethylpiperidin-4-yl octadecanoate and oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine; and bis(2,2,6,6-tetramethylpiperidin-4-yl) sebacate and 2,2,6,6-tetramethylpiperidin-4-yl octadecanoate.

In certain embodiments, ternary combinations of HALS may be included as additives. Such ternary combinations include, for example bis(2,2,6,6-tetramethylpiperidin-4-yl) sebacate, 1-(2-hydroxy-2-methylpropoxy)-4-octadecanoyloxy-2,2,6,6-tetramethylpiperidine, and oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine; 1-(2-hydroxy-2-methylpropoxy)-4-octadecanoyloxy-2,2,6,6-tetramethylpiperidine, 2,2,6,6-tetramethylpiperidin-4-yl octadecanoate, and oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine; and bis(2,2,6,6-tetramethylpiperidin-4-yl) sebacate, 1-(2-hydroxy-2-methylpropoxy)-4-octadecanoyloxy-2,2,6,6-tetramethylpiperidine, and condensate of N,N'-bis(2,2,6,6-tetramethyl-4-piperidyl)-hexamethylenediamine and 4-tert-octylamino-2,6-dichloro-1,3,5-triazine.

In certain embodiments, other binary or ternary combinations of any of the HALS compounds of the present disclosure may be utilized.

In certain embodiments, the one or more hindered amine compounds which are additionally present are present in an amount from 0.1 wt% to 3 wt%, 0.1 wt% to 1.9 wt%, 0.15 wt% to 1.5 wt%, 0.2 wt% to 1 wt%, or 0.2 to 0.5 wt% based on a weight of the polyolefin substrate, or the article thereof. For example, the one or more hindered amine compounds may be present in an amount of about 0.10 wt%, about 0.20 wt%, about 0.30 wt%, about 0.40 wt%, about 0.50 wt%, about 0.60 wt%, about 0.70 wt%, about 0.80 wt%, about 0.90 wt%, about 1.00 wt%, about 1.10 wt%, about 1.20 wt%, about 1.30 wt%, or about 1.40 wt% based on the weight of the polyolefin substrate or the article thereof.

In certain embodiments, one or more antioxidants may be incorporated as additives into the polyolefin substrate. The antioxidants may include, but are not limited to, hydroxylamine stabilizers (e.g., dialkylhydroxylamine stabilizer), a combination of an organic phosphorus stabilizer and a hindered phenolic antioxidant, a combination of an organic phosphorus stabilizer and a dialkylhydroxylamine stabilizer, an amine oxide stabilizer, or a combination of an organic phosphorus stabilizer and an amine oxide stabilizer.

Organic phosphorus stabilizers include, for example, phosphite and phosphonite stabilizers such as triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, bis(2,4-di-α-cumylphenyl) pentaerythritol diphosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy-pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis-(2,4-di-tert-butylphenyl) 4,4'-biphenylene-diphosphonite, 6-isooctyloxy-2,4,8,10-tetra-tert-butyl-dibenzo[d,f][1,3,2]dioxaphosphepin, 6-fluoro-2,4,8,10-tetra-tert-butyl-12-methyl-dibenzo[d,g][1,3,2]dioxaphosphocin, bis(2,4-di-tert-butyl-6-methylphenyl) methyl phosphite, bis(2,4-di-tert-butyl-6-methylphenyl) ethyl phosphite, 2,2',2"-nitrilo[triethyltris(3,3'5,5'-tetra-tert-butyl-1,1'-biphenyl-2,2'-diyl) phosphite], bis(2,4-di-t-butylphenyl) octylphosphite, poly(4,4'- {2,2'-dimethyl-5,5'-di-t-butylphenylsulfide-}octylphosphite), poly(4,4'{-isopropylidenediphenol}-octylphosphite), poly(4,4'- {isopropylidenebis[2,6-dibromophenol]}-octylphosphite), and poly(4,4'-{2,2'-dimethyl-5,5'-di-t-butylphenylsulfide}-pentaerythritol diphosphite).

For illustrative purposes, some of the structures for the aforementioned antioxidants are shown below.

### 6-fluoro-2,4,8,10-tetra-tert-butyl-12-methyl-dibenzo[d,g][1,3,2]dioxaphosphocin:

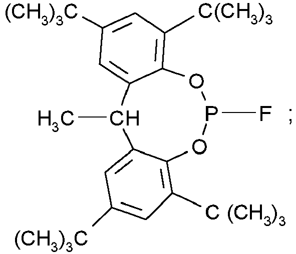

### 2,2',2"-nitrilo[triethyltris(3,3'5,5'-tetra-tert-butyl-1,1'-biphenyl-2,2'-diyl) phosphite]:

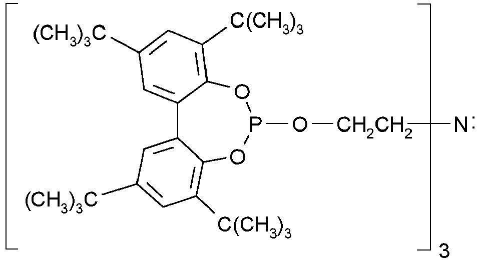

### 6-isooctyloxy-2,4,8,10-tetra-tert-butyl-dibenzo[d,f][1,3,2]dioxaphosphepin:

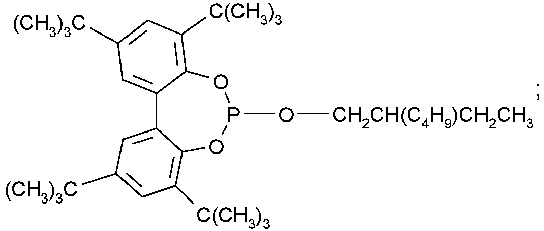

### bis(2,4-di-tert-butylphenyl) pentaerythritol diphosphite:

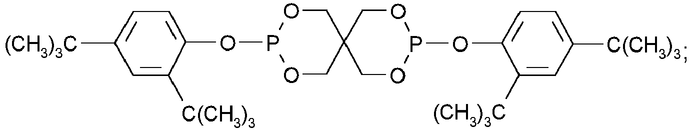

### bis(2,6-di-tert-butyl-4-methylphenyl) pentaerythritol diphosphite:

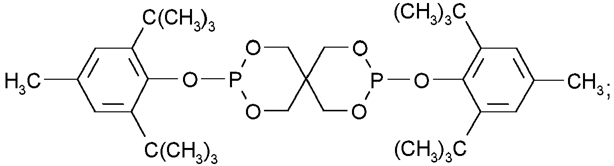

### bis(2,4-di-tert-butyl-6-methylphenyl) ethyl phosphite:

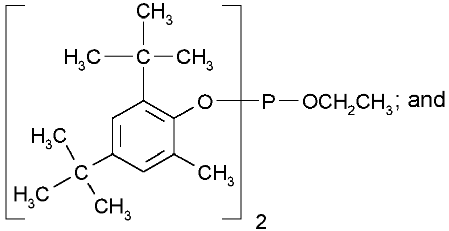

### tetrakis-(2,4-di-tert-butylphenyl) 4,4'-biphenylene-diphosphonite:

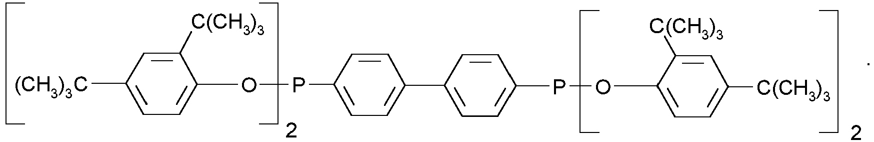

Other suitable antioxidants may have the following structures: 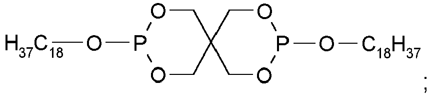 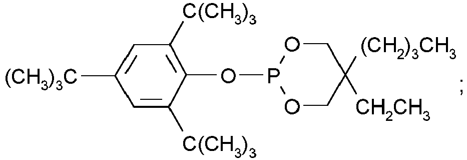 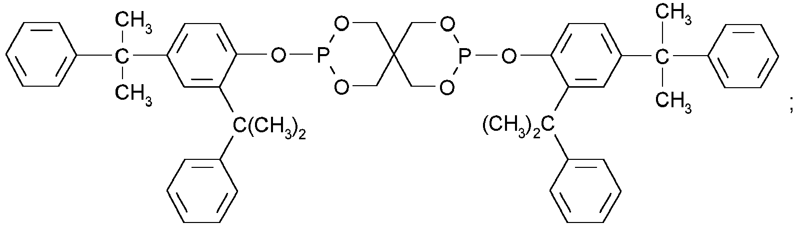 and

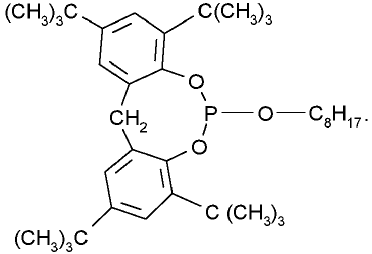

Hindered phenolic antioxidants include, for example, tris(3,5-di-tert-butyl-4-hydroxybenzyl) isocyanurate, 1,3,5-tris-(3,5-di-tert-butyl-4-hydroxybenzyl)-2,4,6-trimethylbenzene, calcium salt of the monoethyl ester of 3,5-di-tert-butyl-4-hydroxybenzylphosphonic acid, pentaerythritol tetrakis [3-(3,5-di-tert-butyl-4-hydroxyphenyl) propionate], and octadecyl 3-(3,5-di-tert-butyl-4-hydroxyphenyl) propionate. Vitamin E and vitamin E acetate antioxidants may also be used alone or in combination with other antioxidants.

In certain embodiments, the combination of an organic phosphorus stabilizer and a hindered phenolic antioxidant is tris(2,4-di-tert-butylphenyl) phosphite and pentaerythritol tetrakis [3-(3,5-di-tert-butyl-4-hydroxyphenyl) propionate] or octadecyl 3-(3,5-di-tert-butyl-4-hydroxyphenyl) propionate.

In certain embodiments, a weightweight ratio of organic phosphorus stabilizer to hindered phenolic antioxidant is from about 9:1 to about 1:9, as well as with ratios in between, for instance about 8:1, about 7:1, about 6:1, about 5:1, about 4:1, about 3:1, about 2:1, about 1:1, about 1:2, about 1:3, about 1:4, about 1:5, about 1:6, about 1:7, or about 1:8 with ratios in between the aforementioned ratios.

Hydroxylamine stabilizers may include, for example, N,N-dibenzylhydroxylamine, N,N-diethylhydroxylamine, N,N-dioctylhydroxylamine, N,N-dilaurylhydroxylamine, N,N-didodecylhydroxylamine, N,N-ditetradecylhydroxylamine, N,N-dihexadecylhydroxylamine, N,N-dioctadecylhydroxylamine, N-hexadecyl-N-tetradecylhydroxylamine, N-hexadecyl-N-heptadecylhydroxylamine, N-hexadecyl-N-octadecylhydroxylamine, N-heptadecyl-N-octadecylhydroxylamine, N-methyl-N-octadecylhydroxylamine, and N,N-di(C₁₆-C₁₈alkyl)hydroxylamine.

Amine oxide stabilizers may include, for example, di(C₁₆-C₁₈) alkyl methyl amine oxide, a representative example being Genox^{®} EP (Addivant).

In certain embodiments, a combination of an organic phosphorus stabilizer and a dialkylhydroxylamine is tris(2,4-di-tert-butylphenyl) phosphite and N,N-di(C₁₆-C₁₈alkyl)hydroxylamine. In certain embodiments, a combination of an organic phosphorus stabilizer and an amine oxide stabilizer is tris(2,4-di-tert-butylphenyl) phosphite and di(C₁₆-C₁₈)alkyl methyl amine oxide. The weightweight ratios of these two combinations may be as above for the organic phosphorus/hindered phenolic antioxidant combination.

In certain embodiments, the additives may include one or more antioxidants. In certain embodiments, the one or more antioxidants include a combination of a first compound having a formula of: 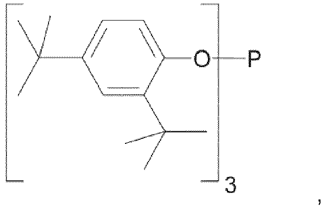 and a second compound having a formula of:

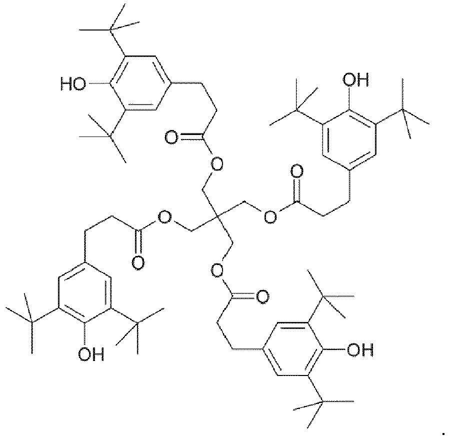

In some embodiments, the antioxidant may be a blend of the first and second compounds, available commercially as IRGANOX^{®} B 225.

In certain embodiments, the one or more antioxidants are present in an amount from 0.01 wt% to 1 wt%, 0.01 wt% to 0.75 wt%, 0.01 wt% to 0.5 wt%, 0.01 wt% to 0.2 wt%, or 0.05 wt% to 1 wt% based on a weight of the polyolefin substrate or the article thereof. For example, the one or more antioxidants may be present in an amount of about 0.01 wt%, about 0.05 wt%, about 0.10 wt%, about 0.15 wt%, about 0.20 wt%, about 0.30 wt%, about 0.40 wt%, about 0.50 wt%, about 0.60 wt%, about 0.70 wt%, about 0.80 wt%, about 0.90 wt%, or about 1.00 wt% based on the weight of the polyolefin substrate or the article thereof.

In certain embodiments, one or more colorants may be incorporated as additives into the polyolefin substrate. The colorants may include, for example, organic pigments, inorganic pigments, and mixtures thereof. Some examples of colorants may be found in Pigment Handbook, T. C. Patton, Ed., Wiley-Interscience, New York, 1973. Any of commercial pigments used in polymer based products can be utilized in the present compositions such as metallic oxides (e.g., titanium dioxide, zinc oxide, aluminum oxide, and iron oxide) metal hydroxides, metal flakes (e.g., aluminum flakes), chromates (e.g., lead chromate), sulfides, sulfates, carbonates, carbon black, bismuth vanadate, silica, talc, china clay, phthalocyanine blues and greens, organo reds, organo maroons, pearlescent pigments, and other organic pigments. Chromate-free pigments, such as barium metaborate, zinc phosphate, aluminum triphosphate, and mixtures thereof, may also be used.

Other suitable pigments include C.I. Pigments, such as Black 12, Black 26, Black 28, Black 30, Blue 15.0, Blue 15.3 (G), Blue 15.3 (R), Blue 28, Blue 36, Blue 385, Brown 24, Brown 29, Brown 33, Brown 10P850, Green 7 (Y), Green 7 (B), Green 17, Green 26, Green 50, Violet 14, Violet 16, Yellow 1, Yellow 3, Yellow 12, Yellow 13, Yellow 14, Yellow 17, Yellow 62, Yellow 74, Yellow 83, Yellow 164, Yellow 53, Red 2, Red 3 (Y), Red 3 (B), Red 4, Red 48.1, Red 48.2, Red 48.3, Red 48.4, Red 52.2, Red 49.1, Red 53.1, Red 57.1 (Y), Red 57.1 (B), Red 112, Red 146, Red 170 (F5RK Type) Bluer, C.I. Pigment Orange 5, Pigment Orange 13, Pigment Orange 34, Pigment Orange 23 (R), and Pigment Orange 23 (B). Suitable organic pigments include Pigment Yellow 151, Pigment Yellow 154, Pigment Yellow 155, Pigment Red 8, Pigment Red 8, Pigment Red 49.2, Pigment Red 81, Pigment Red 169, Pigment Blue 1, Pigment Violet 1, Pigment Violet 3, Pigment Violet 27, Pigment Red 122, and Pigment Violet 19. Suitable inorganic pigments include Middle Chrome, Lemon Chrome, Primrose Chrome, Scarlet Chrome, and Zinc Chromate.

Suitable organic pigments may include, for example, phthalocyanines, perylenes, azo compounds, isoindolines, quinophthalones, diketopyrrolopyrroles, qyinacridones, dioxazines, and indanthrones. Blue pigments may include, for example, pigments of the indanthrone and copper phthalocyanine classes, for instance Pigment Blue 60, Pigment Blue 15:1, Pigment Blue 15:3, Pigment Blue 15:4, and Pigment Blue 15:6. Green pigments may include, for example, pigments of the copper phthalocyanine class, for instance Pigment Green 7 and Pigment Green 36. Magenta pigments may include, for example, pigments of the quinacridone class, for instance 2,9-dichloro quinacridone and Pigment Red 202. Red pigments may include, for example, pigments of the quinacridone class, for instance dimethyl quinacridone and Pigment Red 122, pigments of the perylene class, for instance Pigment Red 149, Pigment Red 178, and Pigment Red 179, or pigments of the diketopyrrolopyrrole class, for instance Pigment Red 254 and Pigment Red 264. Yellow pigments may include, for example, pigments of the pteridine, isoindolinone, and isoindoline classes, for instance Pigment Yellow 215, Pigment Yellow 110, and Pigment Yellow 139. Orange pigments may include, for example, pigments of the isoindolinone or diketopyrrolopyrrole classes, for instance Pigment Orange 61, Pigment Orange 71, and Pigment Orange 73. Violet pigments may include, for example, pigments of the quinacridone class, for instance Pigment Violet 19, or pigments of the dioxazine class, for instance Pigment Violet 23 and Pigment violet 37. In certain embodiments, mixtures of pigments may be utilized.

In certain embodiments, the one or more colorants may be present, in total, in an amount from 0.10 wt% to 3.0 wt%, or 0.20 wt% to 1.0 wt% based on a weight of the polyolefin substrate or the article thereof. For example, the one or more colorants may be present in an amount of about 0.3 wt%, about 0.4 wt%, about 0.5 wt%, about 0.6 wt%, about 0.7 wt%, about 0.8 wt%, or about 0.9 wt% based on the weight of the polyolefin substrate or the article thereof, as well as in amounts in between the aforementioned amounts.

In certain embodiments, one or more fillers may be incorporated as additives into the polyolefin substrate. Fillers act to improve the polymer mechanical properties, such as impact or tensile strength. Examples of fillers include, but are not limited to, metal hydrate such as aluminum trihydrate (ATH), metal oxide such as magnesium dihydroxide (MDH), and metal carbonate such as calcium carbonate. Other fillers useful for polyolefin compositions include wood chips, wood flour, wood flakes, wood fibers, sawdust, flax, jute, hemp, kenaf, rice hulls, abaca, natural cellulosic fibers, and combinations thereof. Fillers may be inorganic and include alkali or alkali earth metal carboxylates stearates or sulfates. For example, the inorganic fillers include talcs (magnesium silicates), mica, vermiculite, diatomite, perlite, calcium carbonate, dolomite, silica, magnesium hydroxide, zinc borate, wollastonite, fly ash, kaolin clay, mica, or various titanium dioxides including surface treated titanium dioxide. Fillers may also include organic or inorganic fibers, such as glass, polyester, polyamide, or polyaramid fibers. Suitable fillers for plastics are described in Wiley Encyclopedia of Polymer Science and Technology, Volume 10, "Fillers", by A.H. Tsou, W.H. Waddell.

Loading levels of fillers may range, in certain embodiments, from 5 wt% to 70 wt%, 5 wt% to 60 wt%, 10 wt% to 50 wt%, or 15 wt% to 40 wt% based on a weight of the polyolefin substrate or the article thereof. For example, fillers may be present at about 20 wt%, about 25 wt%, about 30 wt%, or about 35 wt% based on the weight of the polyolefin substrate or the article thereof, as well as amounts in between the aforementioned amounts.

Further additives may also be present in the compositions disclosed herein, such as, antistats, antiscratch, slip agents, polymer processing aids, etc. (see Plastic Additives Handbook; 6th Edition). Further additives include metal salts of fatty acids, for example, calcium, magnesium, zinc, or aluminum stearate. Further additives also include thiosynergists, for example dilauryl thiodipropionate or distearyl thiodipropionate. Further additives also include benzofuranone stabilizers, for example those disclosed in U.S. Pat. Nos. 4,325,863, 4,338,244, 5,175,312, 5,216,052, 5,252,643 5,369,159 5,356,966 5,367,008 5,428,177 or 5,428,162 or U.S. Patent App. Pub. No. 2012/0238677, including 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2-acetyl-5-isooctylphenyl)-5-isooctylbenzofuran-2-one, and 3-(2,3-dimethylphenyl)-5,7-di-tert-butyl-benzofuran-2-one.

Further additives also include compatibilizers or dispersing aids, for example, maleic anhydride grafted PE or PP, poly(ethylene-co-vinyl acetate), poly(ethylene-acrylic acid), etc. The further additives may be present from 0.1 wt% to 10 wt%, or 0.2 wt% to 5 wt% based on a weight of the polyolefin substrate or the article thereof.

In certain embodiments, the additives may include one or more additional additives, such as an acid scavenger. In certain embodiments, the acid scavenger is zinc stearate. In certain embodiments, the acid scavenger may be present, in total, in an amount from 0.1 wt% to 3.0 wt%, or 0.10 wt% to 2.0 wt% based on the weight of the polyolefin substrate or the article thereof.

In preparing a polyolefin substrate having additives incorporated therein, any of components described herein and optional further additives can be premixed or added individually. In certain embodiments, additives can be added before, during, or after polymerization of olefins. In certain embodiments, additives can be incorporated into the substrate in pure form or encapsulated in waxes, oils or polymers In certain embodiments, one or more additives are sprayed onto a polyolefin substrate, and may be used to dilute other additives or their melts so that the other additives can also be sprayed also together onto the polyolefin substrate. In certain embodiments, addition by spraying during deactivation of polymerization catalysts may be performed. In certain embodiments, steam may be used for deactivation.

The addition of the additives of the invention and of further additives to the polyolefin can be carried out in all customary mixing machines in which the polyolefin is melted and mixed with the additives. Suitable machines are known to those skilled in the art. They are predominantly mixers, kneaders and extruders.

The mixing process is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7).

For example, the screw length is 1 - 60 screw diameters, preferably 35-48 screw diameters. The rotational speed of the screw is preferably 10 - 600 rotations per minute (rpm), very particularly preferably 25 - 300 rpm.

The maximum throughput is dependent on the screw diameter, the rotational speed and the driving force. The mixing and incorporating process of the invention can also be carried out at a level lower than maximum throughput by varying the parameters mentioned or employing weighing machines delivering dosage amounts.

If a plurality of components is added, these can be premixed or added individually.

The materials containing the additives of the invention described herein preferably are used for the production of molded articles, for example roto-molded articles, injection molded articles, profiles and the like, and especially a fiber, spun melt non-woven, film, tape or foam. Preferred as articles are fibers, spun melt non-wovens, films and tapes, especially films or tapes and more preferably films. Transparent films are especially preferred.

The articles can be prepared in known manner. For example, the polymeric articles may be manufactured by any process available to those of ordinary skill in the art including, but not limited to, extrusion, co-extrusion, extrusion coating onto various substrates, extrusion blowing, multi- or single-component melt spinning and/or wet spinning and/or dry spinning, film casting, film blowing, calendering, injection molding, blow molding, compression molding, thermoforming, spinning, blow extrusion or rotational casting.

Corresponding films or thin thickness articles may be used to manufacture polymeric films, sheets, bags, bottles, styrofoam cups, plates, utensils, blister packages, boxes, package wrappings, stretch and shrink wrap, plastic fibers, bicomponent fibers comprising two or more polymers, tapes, raffia, big-bags, agricultural articles such as twine agricultural yarns, bale wrap films, silage films, mulch films, small tunnel films, banana bags, direct covers, greenhouse covers, nonwoven, pots for agricultural use, goetextiles, landfill covers, industrial covers, waste covers, waste bags, dumps, laminating, swimming pools covers, wallpaper, temporary scaffolding sheets, building films, roofing films, desalination film, batteries, connectors, silt fences, poultry curtains, films for building temporary shelter constructions, multilayered and/or multicomponent structures or the like.

A polyolefin article for agricultural use, preferably a film, typically obtained with the blow extrusion technology, is preferred. A monolayer film or a multilayer film of three, five or seven layers is of particular interest. The most important application of the polyolefin films in agriculture is as covers for greenhouses and tunnels to grow crops in a protected environment.

In certain embodiments, one physical dimension of the article is less than 1 mm, especially less than 0.8 mm and more preferably less than 0.6 mm. This refers to the smallest physical outward dimension of a solid object or a solid portion of an object, which in case of a film would be the thickness. This can also be designated as "minimum physical dimension". Films with such dimensions are highly preferred, especially films with one physical dimension of less than 0.8 mm, preferably less than 0.6 mm. Also for multi-layered articles it is preferred that these have an overall minimum physical dimension (like the thickness of multi-layered films) of less than 1 mm, especially less than 0.8 mm and more preferably less than 0.6 mm (e.g., several thin film articles layered onto each other or laminated together). Interesting ranges are those of 20 to 1000 micrometer, especially 20 to 800 micrometer and more preferably 20 to 600 micrometer.

For the articles of the invention it is preferred that these pass the standard test DIN4102-Part 1 (May 1998).

Furthermore, for the article of the invention it is preferred that a performance rating of the article from a UL-94 vertical burn (VB) test is V-0 when the article is in a form of a 3.175 mm injection molded bar.

A further aspect of the invention is a flame retardant composition comprising
a phosphonate ester of formula (1), as defined hereinbefore,
an N-alkoxy hindered amine, and
a melamine cyanurate.

Such compositions can be, for example, in the form of a masterbatch. Such masterbatches can comprise the phosphonate ester of formula (1) in an amount of 10% to 80%, especially 20% to 70% and more preferably 30% to 60% by weight, the melamine cyanurate in an amount of 10% to 80%, especially 20% to 70% and more preferably 30% to 60% by weight, and the N-alkoxy hindered amine in an amount of 1% to 50%, especially 1% to 30% and more preferably 2% to 20% by weight.

Such masterbatches may optionally comprise in addition a bonding agent, like glycerol monostearate.

Such masterbatch compositions may optionally comprise in addition a polyolefin. Such masterbatch compositions may comprise 0% to 50%, especially 0% to 30% and more preferably 0% to 20% by weight of polyolefin. Preference is given to polyolefin containing masterbatches, comprising 1% to 50%, especially 1% to 30% and more preferably 1% to 20% by weight of polyolefin.

Furthermore, the above flame retardant compositions may also comprise higher amounts of polyolefins, so that it is possible to use such compositions directly for the preparations of articles. For such flame retardant compositions the amounts of flame retardants are as given above for the polyolefin substrates.

As to the flame retardant compositions, especially the phosphonate ester of formula (1), the N-alkoxy hindered amine as defined hereinabove, the melamine cyanurate and the polyolefin, the definitions and preferences given hereinbefore apply.

A further aspect of the invention is the use of a composition comprising
a phosphonate ester of formula (1) as defined hereinbefore,
an N-alkoxy hindered amine as defined hereinabove, and
a melamine cyanurate
for increasing flame retardancy of polyolefins.

As to such compositions, especially the phosphonate ester of formula (1), the N-alkoxy hindered amine, the melamine cyanurate and the polyolefin, the definitions and preferences given hereinbefore apply.

The following examples illustrate the invention in greater detail. All percentages and parts are by weight, unless stated otherwise.

Example 1: Flame retardancy performance of polyethylene films containing different combinations of flame retardants.

### a) Polymer Component and light stabilizer

Polymer component (LLDPE): LLDPE, DOWLEX^{™} SC 2108G, manufacturer Dow
Light stabilizer (LS): Chimassorb^{®} 2020, manufacturer BASF SE

### b) Flame Retardant Components

FR-1: 1-(2-hydroxy-2-methylpropoxy)-4-octadecanoyloxy-2,2,6,6-tetramethylpiperidine
FR-2: Pentaerythritol-di-methyl diphosphonate (available as AFLAMMIT^{®} PCO 900 from THOR GROUP LIMITED)
FR-3: Melamine cyanurate (available as Melapur^{®} MC from BASF SE)

### c) LLDPE film manufacture

Unless stated otherwise, LLDPE, LS and the corresponding flame retardant components FR-1, FR-2 and FR-3 are dry blended in the amounts as indicated and then melt compounded into pellets on a co-rotating twin-screw extruder Berstorff 46D (lab size twin screw extruder, 25 mm screw diameter) at a maximum temperature Tₘₐₓ of 230 °C.

The pelletized fully formulated resin is then casted at a maximum temperature Tₘₐₓ of 220 °C into 250 µm films using a cast film equipment Collin CR-136/350 coupled with an extruder Collin E 30 M.

### d) Performance of formulation as flame retardant

The produced films are evaluated according to the standard DIN4102-Part 1 (May 1998).

DIN4102-Part 1: The specimen is positioned vertically and the ignition flame is applied at the lower edge of the specimen (edge ignition test).

Classification is based on the time for flames to spread 150 mm of the specimen.

If the flame does not reach the 150 mm reference mark within 20 s, the tested film passes the test and is classified B2.

If the flame reaches the 150 mm reference mark within 20 s, the tested film is non classified (n.c.)

Concentrations of additives and performance of film specimen are given in Tables 1 and 2

**Table 1: Concentrations of added additives in the LLDPE cast film**

| Comparative Compositions (compositions not according to the present invention): Ref. 1, 2, 3, 4, 5, 6, Inv. 1 and Inv. 2 | |
|---|---|
| Film No. | Additive* |
| Ref. 1 | No FR |
| Ref. 2 | 2 % FR-1 |
| Ref. 3 | 5 % FR-2 |
| Ref. 4 | 5 % FR-3 |
| Ref. 5 | 0.4 % FR-1 + 4.6 % FR-3 |
| Ref. 6 | 2.5 % FR-2 + 2.5 % FR-3 |
| Inv. 1 | 0.4 % FR-1 + 1.8 % FR-2 + 2 % FR-3 |
| Inv. 2 | 0.4 % FR-1 + 4.6 % FR-2 |

| | |
|---|---|
| * Stabilization of all films with 0.2% Chimassorb^{®} 2020 | |

**Table 2: Flaming test on 250 µm LLDPE cast films according to modified DIN 4102-Part 1 (edge ignition)**

| | Ref.1 | Ref.2 | Ref.3 | Ref.4 | Ref.5 | Ref.6 | Inv.1 | Inv. 2 |
|---|---|---|---|---|---|---|---|---|
| LLDPE | 100% | 98% | 95% | 95% | 95% | 95% | 95.8% | 95% |
| FR-1 | | 2% | | | 0.4% | | 0.4% | 0.4% |
| FR-2 | | | 5% | | | 2.5% | 1.8% | 4.6% |
| FR-3 | | | | 5% | 4.6% | 2.5% | 2% | |
| DIN4102-B2 rating with 250 µm films ^{a)} | fail | fail | pass | fail | fail | fail | pass | pass |
| Burning time [sec] ^{b)} | 43 | 21 | 11 | 33 | 30 | 16 | 7 | 6 |
| Damaged length [mm] ^{c)} | 160 | 99 | 70 | 190 | 190 | 93 | 53 | 46 |
| Burning drips paper ignition ^{d)} | yes | yes | no | yes | yes | yes | no | no |

| | | | | | | | | |
|---|---|---|---|---|---|---|---|---|
| ^{a)}: Rated "pass" if flaming does not reach the 150 mm gauge mark within 20 seconds after flame application according to the DIN 4102-Part 1 test norm. ^{b)}: Burning time, in second, is the duration of the flaming after flame application up to the extinction of flame. ^{c)}: Damaged lenght, in mm, is the vertical part of the film being burned after the extinction of flame. ^{d)}: Rated "no" if molten and burning drips that have fallen on the filter paper does not ignite the paper placed underneath the test specimen according to the DIN 4102-Part 1 test norm. "no" is the best rating. | | | | | | | | |

Inv. 1 and Inv. 2 increase significantly the FR performance of the composition in comparison to Comparative Compositions Ref. 1, 2, 3, 4, 5 and 6. The burning time and also the damaged length are considerably lower for Inv. 1 and Inv. 2, both pass the test according to DIN 4102-Part 1, and no burning drips ignite a paper placed underneath the test specimen.

Example 2: Flame retardancy performance of polyethylene films containing different combinations of flame retardants.

### a) Polymer Component and light stabilizer

Polymer component (LLDPE): LLDPE, DOWLEX^{™} SC 2108G, manufacturer Dow
Light stabilizer (LS): Chimassorb^{®} 2020, manufacturer BASF SE

### b) Flame Retardant Components

FR-2: Pentaerythritol-di-methyl diphosphonate (available as AFLAMMIT^{®} PCO 900 from THOR GROUP LIMITED)
FR-3: Melamine cyanurate (available as Melapur^{®} MC from BASF SE)FR-5: Compound of formula (3) (available as Tinuvin^{®} NOR^{™} 371 from BASF SE)
FR-6: Compound of formula (4)

### c) LLDPE film manufacture

Unless stated otherwise, LLDPE, LS and flame retardant components FR-2, FR-3, FR-5 and FR-6 are dry blended in the amounts as indicated and then melt compounded into pellets on a co-rotating twin-screw extruder Berstorff 46D (lab size twin screw extruder, 25 mm screw diameter) at a maximum temperature Tₘₐₓ of 230 °C.

The pelletized fully formulated resin is then casted at a maximum temperature Tₘₐₓ of 220 °C into 250 µm films using a cast film equipment Collin CR-136/350 coupled with an extruder Collin E 30 M.

### d) Performance of formulation as flame retardant

The produced films are evaluated according to the standard DIN4102-Part 1 (May 1998).

DIN4102-Part 1: The specimen is positioned vertically and the ignition flame is applied at the lower edge of the specimen (edge ignition test).

Classification is based on the time for flames to spread 150 mm of the specimen.

If the flame does not reach the 150 mm reference mark within 20 s, the tested film passes the test and is classified B2.

If the flame reaches the 150 mm reference mark within 20 s, the tested film is non classified (n.c.)

Concentrations of additives and performance of film specimen are given in Tables 3 and 4

**Table 3: Concentrations of added additives in the LLDPE cast film**

| | |
|---|---|
| Comparative Composition (composition not according to the present invention) | |
| Ref. 1 | |
| Inventive Composition: Inv. 4 and Inv. 5 | |

| Film No. | Additive* |
|---|---|
| Ref. 1 | No FR |
| Inv. 4 | 0.4 % FR-5 + 2 % FR-2 + 2 % FR-3 |
| Inv. 5 | 0.4 % FR-6 + 2 % FR-2 + 2 % FR-3 |

| | |
|---|---|
| * Stabilization of all films with 0.2% Chimassorb^{®} 2020 | |

**Table 4: Flaming test on 250 µm LLDPE cast films according to modified DIN 4102-Part 1 (edge ignition)**

| | Ref.1 | Inv. 4 | Inv. 5 |
|---|---|---|---|
| LLDPE | 100% | 95.6% | 95.6% |
| FR-2 | | 2% | 2% |
| FR-3 | | 2% | 2% |
| FR-4 | | | |
| FR-5 | | 0.4% | |
| FR-6 | | | 0.4% |
| DIN4102-B2 rating with 250 µm films ^{a)} | fail | pass | pass |
| Burning time [sec] ^{b)} | 43 | 8 | 6 |
| Damaged length [mm] ^{c)} | 160 | 57 | 31 |
| Burning drips paper ignition ^{d)} | yes | no | no |

| | | | |
|---|---|---|---|
| ^{a)}: Rated "pass" if flaming does not reach the 150 mm gauge mark within 20 seconds after flame application according to the DIN 4102-Part 1 test norm. ^{b)}: Burning time, in second, is the duration of the flaming after flame application up to the extinction of flame. ^{c)}: Damaged lenght, in mm, is the vertical part of the film being burned after the extinction of flame. ^{d)}: Rated "no" if molten and burning drips that have fallen on the filter paper does not ignite the paper placed underneath the test specimen according to the DIN 4102-Part 1 test norm. "no" is the best rating. | | | |

Compositions Inv. 4 and 5, which are combinations of N-alkoxy hindered amines (FR-5 or FR-6) with pentaerythritol-di-methyl diphosphonate (FR-2) and melamine cyanurate (FR-3), pass DIN 4102-Part 1 test, and are effective in reducing burning time and damaged length.

## Claims

1. A flame-retardant article comprising a polyolefin substrate having additives incorporated therein, the additives comprising:
a phosphonate ester of formula 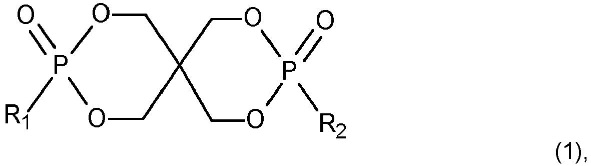
wherein R₁ and R₂ are independently selected from a group consisting of alkyl, optionally substituted alkyl, benzyl, optionally substituted benzyl, phenyl, optionally substituted phenyl, naphthyl, and optionally substituted naphthyl,
a synergist comprising an N-alkoxy hindered amine, and
a melamine cyanurate,
wherein the N-alkoxy hindered amine Is a compound of formula 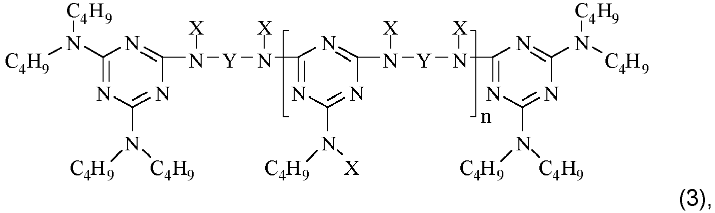
wherein X is a group of formula 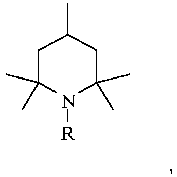
Y is -(CH₂)₆-, each R is -OC₃H₇ and n is an integer from 1 to 5,
or a compound of formula 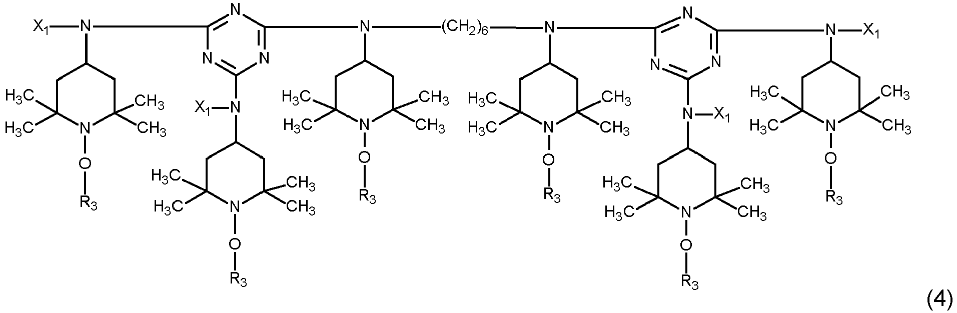
wherein R₃ is n-propyl and X₁ is n-butyl.

2. The article of claim 1, wherein the polyolefin substrate comprises a polymer selected from a group consisting of polypropylene, polyethylene, and copolymers or mixtures thereof.

3. The article of claim 2, wherein the polyolefin has one or more additional polymers incorporated therein, the one or more additional polymers comprising polystyrene, polyamide, polyester, polycarbonate, epoxy resins, polyurethane, or copolymers or mixtures thereof.

4. The article of any of claims 1 to 3, wherein a physical dimension of the article is less than 1 mm.

5. The article of claim 4, wherein the article is a film having a thickness of less than 0.8 mm.

6. The article of any of claims 1 to 5, wherein both R₁ and R₂ are methyl.

7. An article according to any of claims 1 to 6, wherein the phosphonate ester of formula (1) is present in an amount of from 0.02 to 20% by weight, based on the weight of the article, the hindered N-alkoxy amine is present in an amount of from 0.02 to 20% by weight, based on the weight of the article, and the melamine cyanurate is present in an amount of from 0.02 to 20% by weight, based on the weight of the article.

8. The article of any of claims 1 to 7, wherein a performance rating of the article from a UL-94 vertical burn (VB) test is V-0 when the article is in a form of a 3.175 mm injection molded bar.

9. A flame retardant composition comprising a phosphonate ester of formula 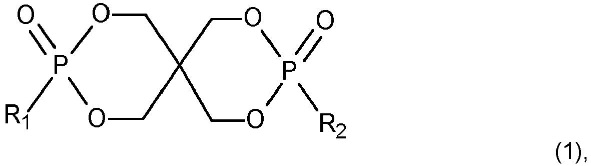
wherein R₁ and R₂ are independently selected from a group consisting of alkyl, optionally substituted alkyl, benzyl, optionally substituted benzyl, phenyl, optionally substituted phenyl, naphthyl, and optionally substituted naphthyl,
an N-alkoxy hindered amine as defined in claim 1, and
a melamine cyanurate.

10. A flame retardant composition according to claim 9, comprising in addition a polyolefin.

11. Use of a composition comprising
a phosphonate ester of formula 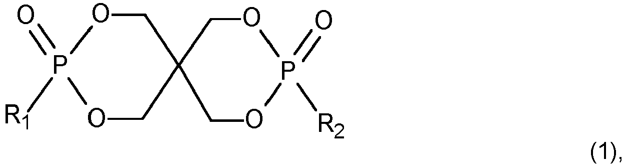
wherein R₁ and R₂ are independently selected from a group consisting of alkyl, optionally substituted alkyl, benzyl, optionally substituted benzyl, phenyl, optionally substituted phenyl, naphthyl, and optionally substituted naphthyl,
an N-alkoxy hindered amine as defined in claim 1, and
a melamine cyanurate
for increasing flame retardancy of polyolefins.

## Patentansprüche

1. Flammwidriger Artikel, umfassend ein Polyolefinsubstrat mit darin eingearbeiteten Additiven, wobei die Additive Folgendes umfassen:
einen Phosphonatester der Formel 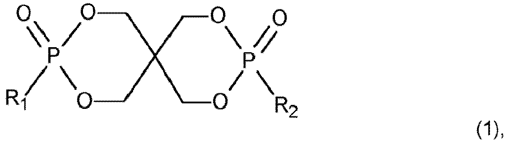
wobei R₁ und R₂ unabhängig aus der Gruppe bestehend aus Alkyl, gegebenenfalls substituiertem Alkyl, Benzyl, gegebenenfalls substituiertem Benzyl, Phenyl, gegebenenfalls substituiertem Phenyl, Naphthyl und gegebenenfalls substituiertem Naphthyl ausgewählt sind,
einen Synergisten, der ein gehindertes N-Alkoxyamin umfasst, und
ein Melamincyanurat,
wobei es sich bei dem gehinderten N-Alkoxyamin um eine Verbindung der Formel 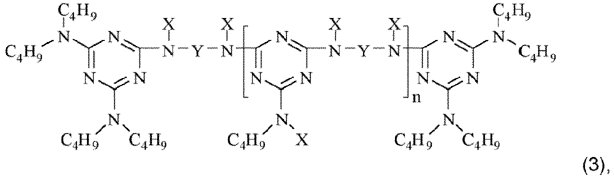
wobei X für eine Gruppe der Formel 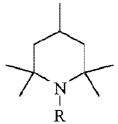
steht,
Y für -(CH₂)₆- steht, R jeweils für -OC₃H₇ steht und
n für eine ganze Zahl von 1 bis 5 steht,
oder eine Verbindung der Formel 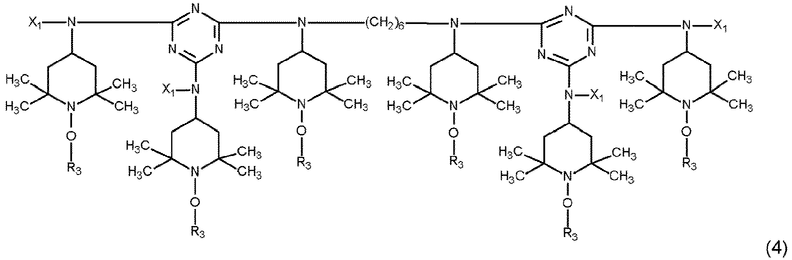
wobei R₃ für n-Propyl steht und X₁ für n-Butyl steht, handelt.

2. Artikel nach Anspruch 1, wobei das Polyolefinsubstrat ein Polymer aus der Gruppe bestehend aus Polypropylen, Polyethylen und Copolymeren oder Mischungen davon umfasst.

3. Artikel nach Anspruch 2, wobei das Polyolefin ein oder mehrere zusätzliche darin eingearbeitete Polymere umfasst, wobei das eine zusätzliche Polymer bzw. die mehreren zusätzlichen Polymere Polystyrol, Polyamid, Polyester, Polycarbonat, Epoxidharze, Polyurethan oder Copolymere oder Mischungen davon umfasst bzw. umfassen.

4. Artikel nach einem der Ansprüche 1 bis 3, wobei die räumliche Abmessung des Artikels weniger als 1 mm beträgt.

5. Artikel nach Anspruch 4, wobei es sich bei dem Artikel um eine Folie mit einer Dicke von weniger als 0,8 mm handelt.

6. Artikel nach einem der Ansprüche 1 bis 5, wobei R₁ und R₂ beide für Methyl stehen.

7. Artikel nach einem der Ansprüche 1 bis 6, wobei der Phosphonatester der Formel (1) in einer Menge von 0,02 bis 20 Gew.-%, bezogen auf das Gewicht des Artikels, vorliegt, das gehinderte N-Alkoxyamin in einer Menge von 0,02 bis 20 Gew.-%, bezogen auf das Gewicht des Artikels, vorliegt und das Melamincyanurat in einer Menge von 0,02 bis 20 Gew.-%, bezogen auf das Gewicht des Artikels, vorliegt.

8. Artikel nach einem der Ansprüche 1 bis 7, wobei die Leistungsbewertung des Artikels gemäß einem UL-94-Vertikalbrenntest (VB) V-0 ist, wenn der Artikel in Form eines 3,175-mm-Spritzgussstabs vorliegt.

9. Flammschutzmittelzusammensetzung, umfassend
einen Phosphonatester der Formel 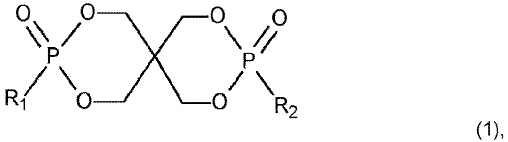
wobei R₁ und R₂ unabhängig aus der Gruppe bestehend aus Alkyl, gegebenenfalls substituiertem Alkyl, Benzyl, gegebenenfalls substituiertem Benzyl, Phenyl, gegebenenfalls substituiertem Phenyl, Naphthyl und gegebenenfalls substituiertem Naphthyl ausgewählt sind,
ein gehindertes N-Alkoxyamin gemäß Anspruch 1 und ein Melamincyanurat.

10. Flammschutzmittelzusammensetzung nach Anspruch 9, die zusätzlich ein Polyolefin umfasst.

11. Verwendung einer Zusammensetzung, umfassend
einen Phosphonatester der Formel 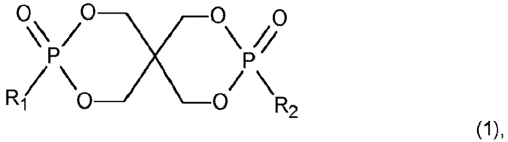
wobei R₁ und R₂ unabhängig aus der Gruppe bestehend aus Alkyl, gegebenenfalls substituiertem Alkyl, Benzyl, gegebenenfalls substituiertem Benzyl, Phenyl, gegebenenfalls substituiertem Phenyl, Naphthyl und gegebenenfalls substituiertem Naphthyl ausgewählt sind,
ein gehindertes N-Alkoxyamin gemäß Anspruch 1 und ein Melamincyanurat,
zur Erhöhung der Flammwidrigkeit von Polyolefinen.

## Revendications

1. Article ignifugeant comprenant un substrat polyoléfinique ayant des additifs incorporés à l'intérieur, les additifs comprenant :
un ester de phosphonate de formule 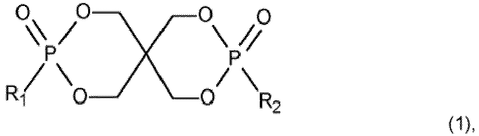
dans laquelle R₁ et R₂ sont indépendamment choisis dans un groupe constitué par les radicaux alkyle, alkyle éventuellement substitués, benzyle, benzyle éventuellement substitué, phényle, phényle éventuellement substitué, naphtyle, et naphtyle éventuellement substitué,
un synergiste comprenant une N-alcoxyamine stériquement encombrée, et
un cyanurate de mélamine,
dans lequel la N-alcoxyamine stériquement encombrée est un composé de formule 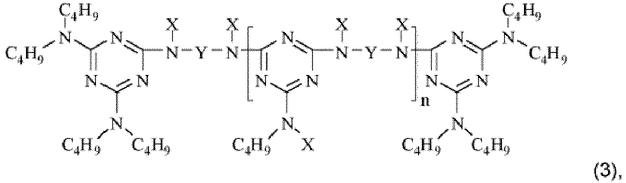
dans laquelle X est un groupe de formule 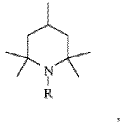
Y est -(CH₂)₆-, chaque R est -OC₃H₇ et n est un entier de 1 à 5,
ou un composé de formule 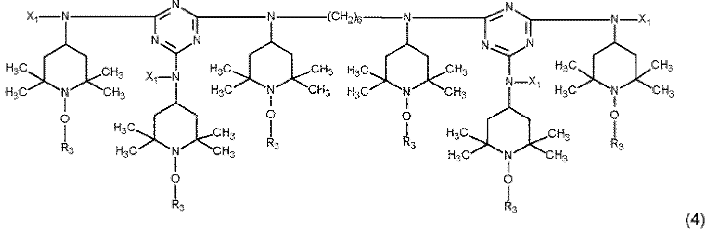
dans laquelle R₃ est un n-propyle et X₁ est un n-butyle.

2. Article de la revendication 1, dans lequel le substrat polyoléfinique comprend un polymère choisi dans un groupe constitué par le polypropylène, le polyéthylène, et les copolymères ou mélanges de ceux-ci.

3. Article de la revendication 2, dans lequel la polyoléfine a un ou plusieurs polymères supplémentaires incorporés à l'intérieur, le ou les polymères supplémentaires comprenant le polystyrène, le polyamide, le polyester, le polycarbonate, les résines époxy, le polyuréthane, ou les copolymères ou mélanges de ceux-ci.

4. Article de l'une quelconque des revendications 1 à 3, une dimension physique de l'article étant inférieure à 1 mm.

5. Article de la revendication 4, l'article étant un film ayant une épaisseur de moins de 0,8 mm.

6. Article de l'une quelconque des revendications 1 à 5, dans lequel R₁ et R₂ sont tous deux des radicaux méthyle.

7. Article selon l'une quelconque des revendications 1 à 6, dans lequel l'ester de phosphonate de formule (1) est présent dans une quantité de 0,02 à 20 % en poids, rapporté au poids de l'article, la N-alcoxyamine stériquement encombrée est présente dans une quantité de 0,02 à 20 % en poids, rapporté au poids de l'article, et le cyanurate de mélamine est présent dans une quantité de 0,02 à 20 % en poids, rapporté au poids de l'article.

8. Article de l'une quelconque des revendications 1 à 7, un indice de performance de l'article dans un test de brûlure verticale (VB) UL-94 étant V-0 quand l'article se présente sous la forme d'une barre moulée par injection de 3,175 mm.

9. Composition ignifugeante comprenant
un ester de phosphonate de formule 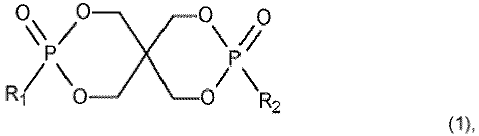
dans laquelle R₁ et R₂ sont indépendamment choisis dans un groupe constitué par les radicaux alkyle, alkyle éventuellement substitués, benzyle, benzyle éventuellement substitué, phényle, phényle éventuellement substitué, naphtyle, et naphtyle éventuellement substitué,
une N-alcoxyamine stériquement encombrée telle que définie dans la revendication 1, et
un cyanurate de mélamine.

10. Composition ignifugeante selon la revendication 9, comprenant en plus une polyoléfine.

11. Utilisation d'une composition comprenant
un ester de phosphonate de formule 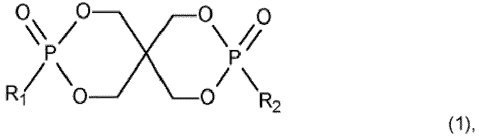
dans laquelle R₁ et R₂ sont indépendamment choisis dans un groupe constitué par les radicaux alkyle, alkyle éventuellement substitués, benzyle, benzyle éventuellement substitué, phényle, phényle éventuellement substitué, naphtyle, et naphtyle éventuellement substitué,
une N-alcoxyamine stériquement encombrée telle que définie dans la revendication 1, et
un cyanurate de mélamine
pour augmenter l'ininflammabilité de polyoléfines.
